# EUROPEAN PATENT APPLICATION

(11) **EP 2 611 245 A1**
(43) Date of publication of application: **03.07.2013**
(21) Application number: 11777210.3
(22) Date of filing: 19.05.2011
(51) Int. Cl.: H04W 72/04, H04W 72/12

(54) **METHOD, EQUIPMENT AND SYSTEM FOR ADJUSTING CONFIGURATION OF SPECTRUM RESOURCES**

(30) Priority: 24.08.2010 CN 201010264177
(71) Applicant: Huawei Technologies Co., Ltd., Shenzhen, Guangdong 518129 (CN)
(72) Inventor: WAN, Lei, Guangdong 518129 (CN); YU, Yinghui, Guangdong 518129 (CN); LV, Yongxia, Guangdong 518129 (CN)
(74) Representative: Epping - Hermann - Fischer
(86) International application number: PCT/CN2011/074333
(87) International publication number: WO 2011/137791

(57) **Abstract**

A method, apparatus and system for adjusting configuration of a spectrum resource are provided. The method for adjusting configuration of a spectrum resource includes: sending, by a first access network device, a first message to a second access network device, where the first message carries first indication information, the first indication information indicating an adjustment quantity of physical resource blocks PRBs in a first cell that are adjusted by the first access network device; and receiving, by the first access network device, a second message sent from the second access network device, where the second message carries second indication information, the second indication information indicating adjustment positions of PRBs of a radio link that are adjusted by the second access network device according to the first indication information. The technical solutions provided in embodiments of the present invention facilitate improvement of usage efficiency of resources.

## Description

This application claims priority to Chinese Patent Application No. 201010264177.4, filed with Chinese Patent Office on August 24, 2010 and entitled "METHOD, APPARATUS AND SYSTEM FOR ADJUSTING CONFIGURATION OF A SPECTRUM RESOURCE", which is incorporated herein by reference in its entirety.

### FIELD OF TECHNOLOGY

The present invention relates to the field of communications technologies, and in particular, to a method, an apparatus and a system for adjusting configuration of a spectrum resource.

### BACKGROUND

Currently, with gradual increase of users using mobile communication systems and an exponential increase of service traffic of a single user, radio resources are gradually becoming resources in short supply.

The issue of spectrum resource shortage may be addressed in two aspects. One is to continue exploring a new spectrum resource for assignment to mobile communication systems. The other is to develop a better way to use an idle spectrum resource as regards low spectrum usage rate.

In practice, assigned spectrums are not fully used, thereby causing low spectrum usage rate. For example, in a frequency division duplexing (FDD, Frequency Division Duplexing) system, downlink and uplink frequency bands generally use the same bandwidth. However, uplink service traffic is not balanced with downlink service traffic in the existing system. Usually, the downlink service traffic is larger. The uplink service traffic is generally far smaller than the downlink service traffic. This results in that part of uplink (UL, Up link) resources are idle. In another aspect, with emergence of new uplink priority services and other possible uplink services, the uplink service traffic also gradually increases. For example, a single transponder is adopted to amplify only uplink signals. Alternatively, in a heterogeneous network, uplink spectrum efficiency is higher than downlink spectrum efficiency when the uplink multi-point coordinated transmission technology or range extension (RE, Range extension) technology is used. In this way, even though uplink service traffic matches downlink service traffic, because the uplink spectrum efficiency is higher than the downlink spectrum efficiency, usage rate of uplink subframes may be lower than that of downlink subframes and some of the UL resources may be redundant.

### SUMMARY

Embodiments of the present invention provide a method, apparatus and system for adjusting configuration of a spectrum resource, to improve usage efficiency of the resources.

To solve the above technical problem, embodiments of the present invention provide the following technical solutions.

A method for adjusting configuration of a spectrum resource includes:
sending, by a first access network device, a first message to a second access network device, where the first message carries first indication information, the first indication information indicating an adjustment quantity of physical resource blocks PRBs in a first cell that are adjusted by the first access network device; and
receiving, by the first access network device, a second message sent from the second access network device, where the second message carries second indication information, the second indication information indicating adjustment positions of PRBs of a radio link that are adjusted by the second access network device according to the first indication information.

A method for adjusting configuration of a spectrum resource includes:
receiving, by a second access network device, a first message sent from a first access network device, where the first message carries first indication information, the first indication information indicating an adjustment quantity of physical resource blocks PRBs in a first cell that are adjusted by the first access network device;
adjusting positions of PRBs of a radio link according to the adjustment quantity of physical resource blocks PRBs in the first cell that are adjusted by the first access network device that is indicated in the first indication information; and
sending a second message to the first access network device, where the second message carries second indication information, the second indication information indicating adjustment positions of the PRBs of the radio link that are adjusted by the second access network device according to the first indication information.

An access network device includes:
an adjustment sending module, configured to send a first message to a second access network device, where the first message carries first indication information, the first indication information indicating an adjustment quantity of physical resource blocks PRBs in a first cell that are adjusted by the first access network device; and
an adjustment receiving module, configured to receive a second message sent from the second access network device, where the second message carries second indication information, the second indication information indicating adjustment positions of PRBs of a radio link that are adjusted by the second access network device according to the first indication information.

An access network device includes:
a fourth receiving module, configured to receive a first message sent from a first access network device, where the first message carries first indication information, the first indication information indicating an adjustment quantity of physical resource blocks PRBs in a first cell that are adjusted by the first access network device; and
a resource adjusting module, configured to adjust positions of PRBs of a radio link according to the adjustment quantity of physical resource blocks PRBs in the first cell that are adjusted by the first access network device that is indicated in the first indication information; and
a fifth sending module, configured to send a second message to the first access network device, where the second message carries second indication information, the second indication information indicating adjustment positions of the PRBs of the radio link that are adjusted by the resource adjusting module according to the first indication information.

A communication system includes:
a first access network device, configured to: send a first message to a second access network device, where the first message carries first indication information, the first indication information indicating an adjustment quantity of physical resource blocks PRBs in a first cell that are adjusted by the first access network device; and receive a second message sent from the second access network device, where the second message carries second indication information, the second indication information indicating adjustment positions of PRBs of a radio link that are adjusted by the second access network device according to the first indication information; and
the second network access device, configured to: receive the first message sent from the first access network device, adjust the positions of the PRBs of the radio link according to the adjustment quantity of physical resource blocks PRBs in the first cell that are adjusted by the first access network device that is indicated in the first indication information, and sends the second message to the first access network device.

In conclusion, in the solutions provided in embodiments of the present invention, the first access network device with redundant uplink and/or downlink resources in a cell adjusts resource configuration in the cell and provides the redundant resources or all resources in the cell for the second access network device to configure a radio access link and/or a radio backhaul link for the cell. The second access network device correspondingly adjusts, according to the adjustment of the resource configuration in the cell performed by the first access network device, resource configuration of the radio access link and/or the radio backhaul link in the cell. This mechanism helps improve usage efficiency of the resources and enhance system performance and quality of service.

### BRIEF DESCRIPTION OF THE DRAWING(S)

To make the technical solutions of the present invention clearer, the accompanying drawings for illustrating various embodiments of the present invention are described as follows. Apparently, the accompanying drawings are for the exemplary purpose only, and person having ordinary skill in the art may derive other drawings from such accompanying drawings without any creative effort.
FIG. 1 is a schematic flowchart of a method for adjusting configuration of a spectrum resource according to a first embodiment of the present invention; and
FIG. 2 is a schematic flowchart of a method for adjusting configuration of a spectrum resource according to a second embodiment of the present invention; and
FIG. 3 is a schematic diagram showing statistics for PRB usage rate according to the second embodiment of the present invention; and
FIG. 4-a is a schematic diagram of initial configuration of a network cell according to the second embodiment of the present invention;

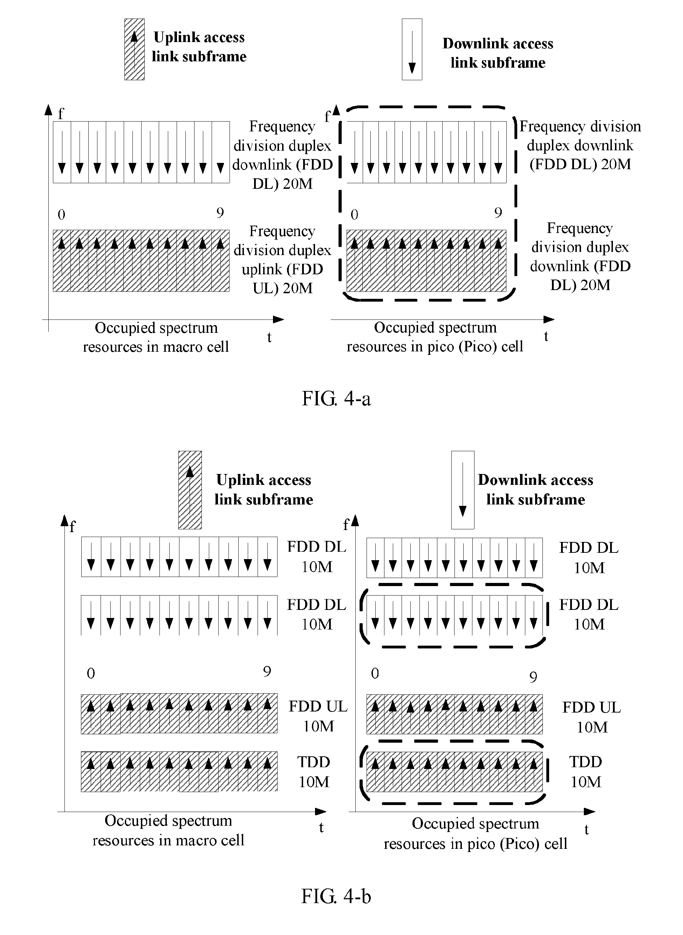

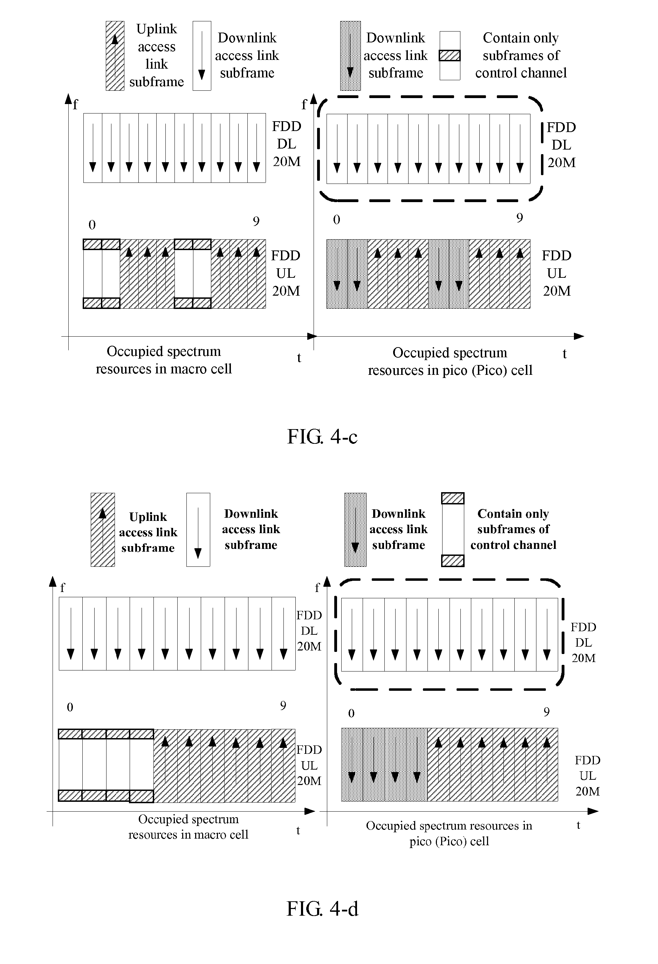

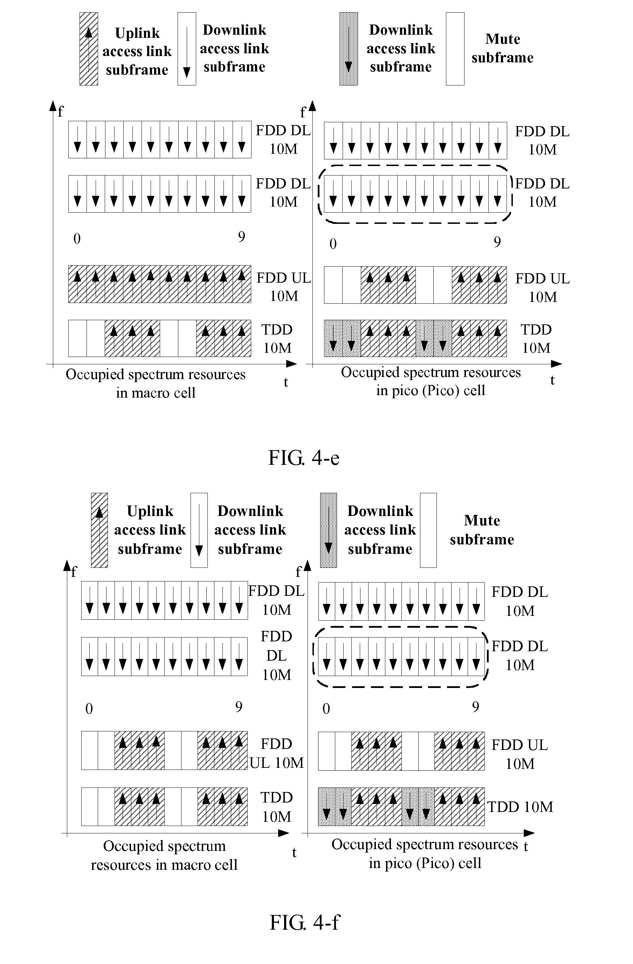

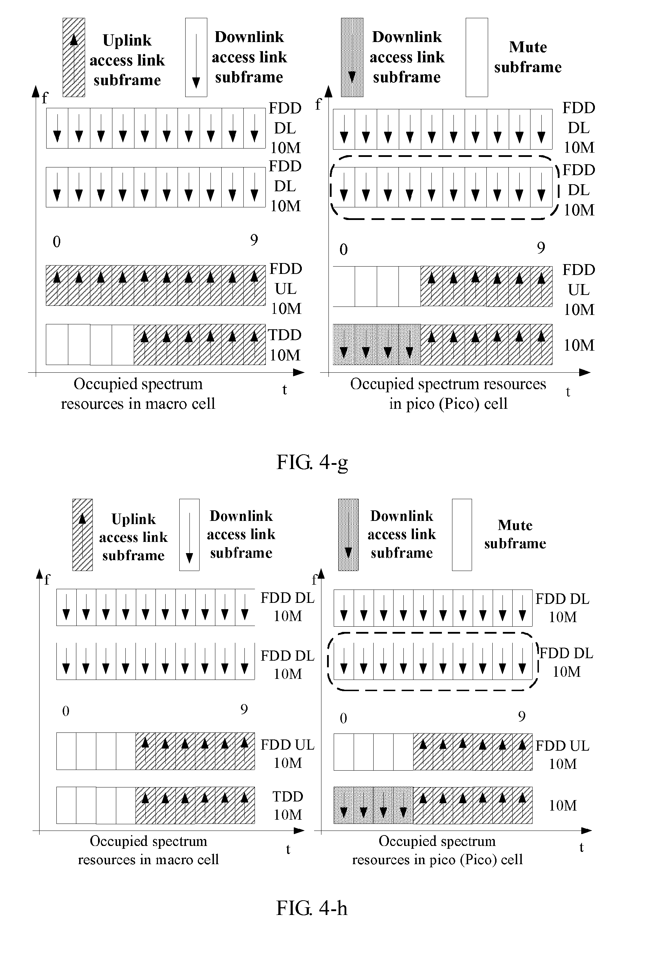

FIG. 4-b is a schematic diagram of another initial configuration of a network cell according to the second embodiment of the present invention;
FIG. 4-c is a schematic diagram of a cell configuration adjustment according to the second embodiment of the present invention;
FIG. 4-d is a schematic diagram of another cell configuration adjustment according to the second embodiment of the present invention;
FIG. 4-e is a schematic diagram of still another cell configuration adjustment according to the second embodiment of the present invention;
FIG. 4-f is a schematic diagram of still another cell configuration adjustment according to the second embodiment of the present invention;
FIG. 4-g is a schematic diagram of still another cell configuration adjustment according to the second embodiment of the present invention;
FIG. 4-h is a schematic diagram of still another cell configuration adjustment according to the second embodiment of the present invention;

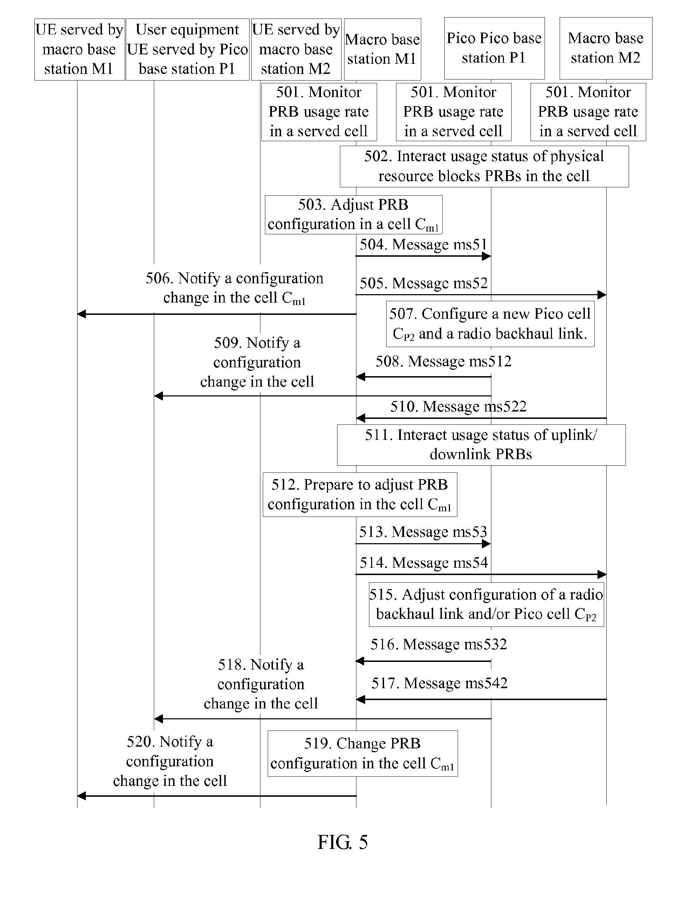

FIG. 5 is a schematic flowchart of a method for adjusting configuration of a spectrum resource according to a third embodiment of the present invention;

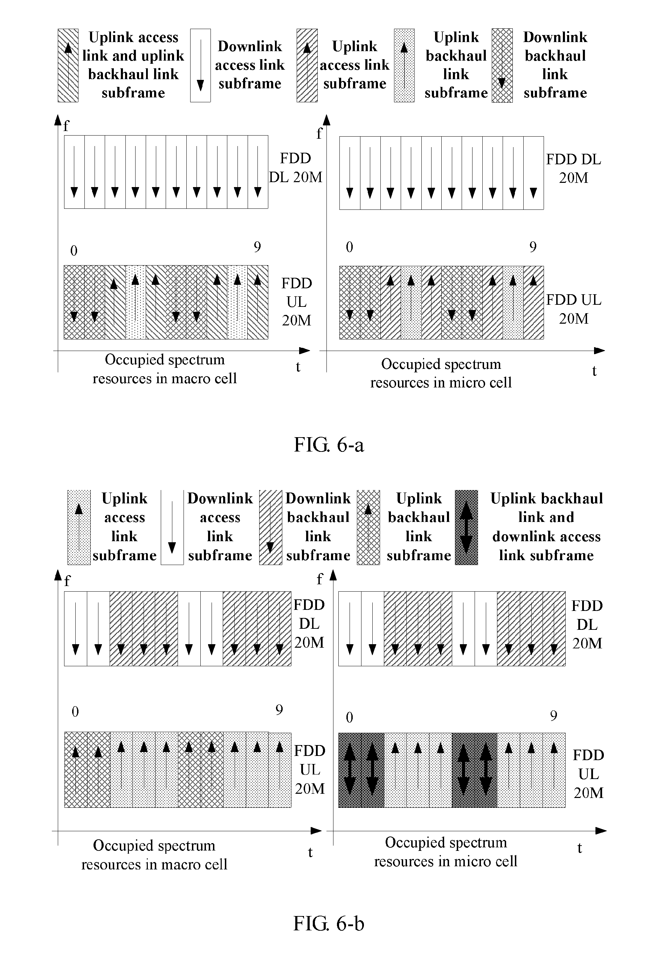

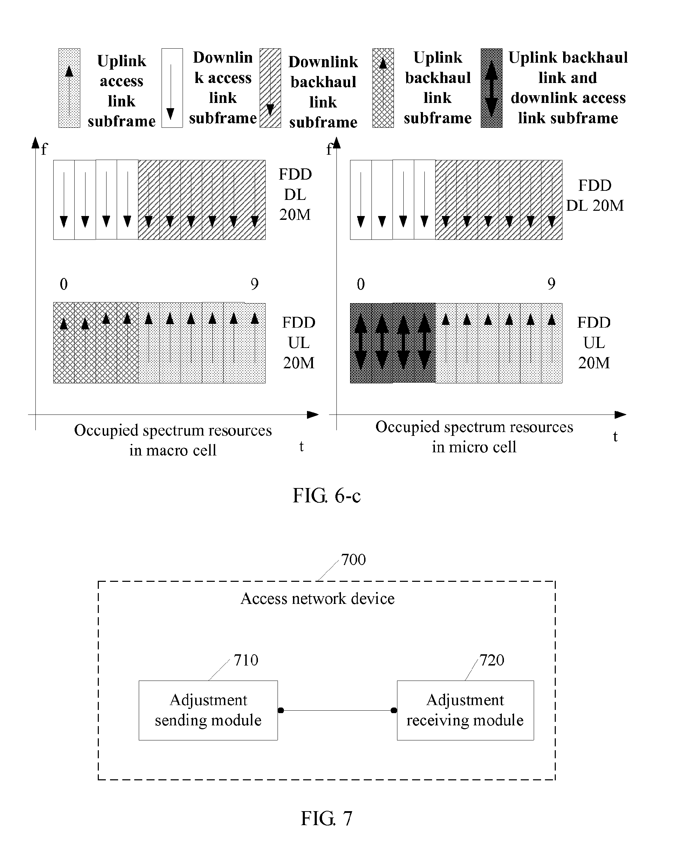

FIG. 6-a is a schematic diagram of a cell configuration adjustment according to the third embodiment of the present invention;
FIG. 6-b is a schematic diagram of another cell configuration adjustment according to the third embodiment of the present invention;
FIG. 6-c is a schematic diagram of still another cell configuration adjustment according to the third embodiment of the present invention;
FIG. 7 is a schematic diagram of an access network device according to an embodiment of the present invention;

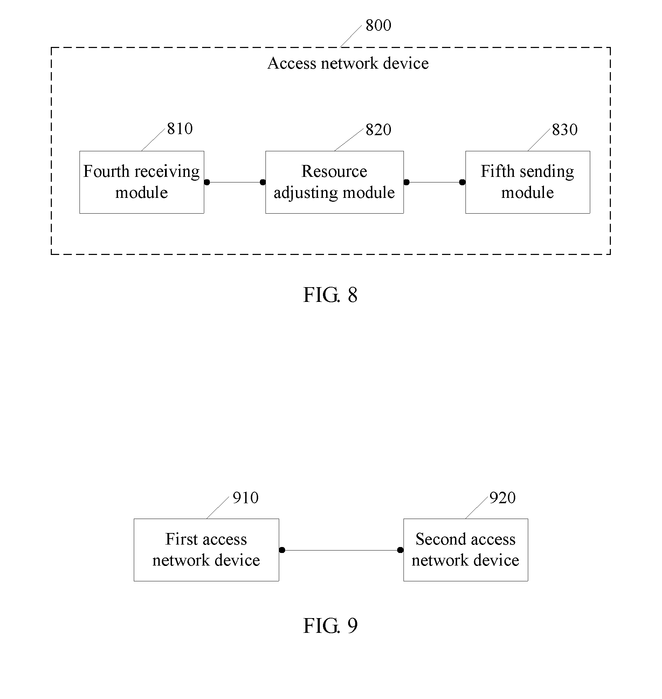

FIG. 8 is a schematic diagram of an access network device according to an embodiment of the present invention; and
FIG. 9 is a schematic diagram of a communication system according to an embodiment of the present invention.

### DETAILED DESCRIPTION

Embodiments of the present invention provide a method, an apparatus and a system for adjusting configuration of a spectrum resource, thus improving usage efficiency of the resources.

The following gives a detailed description with reference to specific embodiments.

It should be noted that, the access network device described in embodiments of the present invention refers to an entity capable of implementing radio access management of a terminal, and may have different names, positions and product forms in different networks. The access network device may be, for example, an evolved Node B (eNodeB), a home evolved Node B (HeNB) or a Node B of other types in an evolved universal mobile telecommunications system (UMTS, Universal Mobile Telecommunications System) territorial radio access network (E-UTRAN, Evolved UMTS Territorial Radio Access Network), or a base station controller or a radio network controller (RNC, Radio Network Controller) in a UMTS territorial radio access network (UTRAN, UMTS Territorial Radio Access Network). In a non-3GPP network, the access network device refers to an entity having the logic function of an evolved packet data gateway (ePDG, Evolved Packet Data Gateway) access network in a wireless local area network (WLAN, Wireless Local Area Network), an access service network base station (ASN BS, Access Service Network Base Station) in a worldwide interoperability for microwave access (WiMAX, Worldwide Interoperability for Microwave Access), or an entity having the logic function of a high rate packet data access network (HRPD AN, High Rate Packet Data Access Network) in a code division multiple access (CDMA, Code Division Multiple Access), or an entity implementing radio access management of a terminal in other networks.

With regard to the problem of low UL/DL spectrum resource usage rate in an FDD system, the technical solutions provided in embodiments of the present invention focus on the research on how to better make use of the idle UL/DL spectrum resource. Embodiments of the present invention mainly consider a scenario where one access network device (for example, a macro base station, a pico (Pico) base station, a femto (Femto) base station or a base station or relay station (Relay) of another type, provides its redundant UL/DL spectrum resource for another access network device (for example, a femto base station, a pico base station, a macro base station, or a base station or relay station of another type) neighboring to the access network device, so that the another access network device adds at least one radio link (including an access link and/or a radio backhaul link and the like) or expands resource configuration of at least one of its radio link (including a radio access network and/or a radio backhaul link and the like) to make full use of the UL/DL spectrum resource. One cell is corresponding to a pair of access links, that is, an uplink access link and a downlink access link. A radio backhaul link also includes an uplink radio backhaul link and a downlink radio backhaul link.

Embodiments of the present invention use the physical resource block (PRB, Physical Resource Block) as a unit of spectrum resources in radio frames for description. One physical resource block may include spectrum resources comprised of a plurality of subcarriers in a specific timeslot in a radio frame.

### Embodiment 1

The following describes, from the perspective of an access network device providing a spectrum resource, an embodiment illustrating a method for adjusting configuration of a spectrum resource according to the present invention. The method includes: sending, by a first access network device, a first message to a second access network device, where the first message carries first indication information, the first indication information indicating an adjustment quantity of physical resource blocks PRBs in a first cell that are adjusted by the first access network device; and receiving, by the first access network device, a second message sent from the second access network device, where the second message carries second indication information, the second indication information indicating adjustment positions of PRBs of a radio link that are adjusted by the second access network device according to the first indication information.

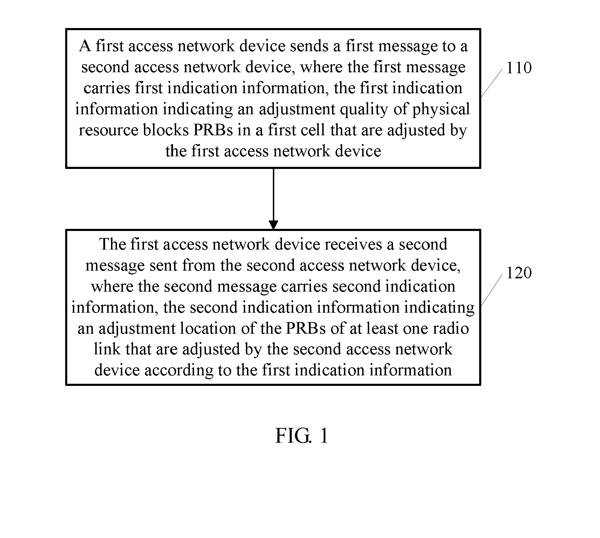

Referring to FIG. 1, the steps may specifically include:
110. A first access network device sends a first message to a second access network device, where the first message carries first indication information, the first indication information indicating an adjustment quality of physical resource blocks PRBs in a first cell that are adjusted by the first access network device.

In practice, the first indication information may be any information capable of indicating adjustment quantity or adjustment positions (indication of the adjustment positions means indication of the adjustment quantity) of PRBs in the first cell that are adjusted by the first access network device to the second access network device. The first indication information may include, for example, one or more types of the following information: frequency information of the resources in the first cell, bandwidth information of the resources in the first cell, the number of timeslots of the resources in the first cell, timeslot position information of the resources in the first cell, and timeslots offset information of the resources in the first cell that are adjusted by the first access network device. Assuredly, the first indication information may not include one or more of the above pieces of information, whereas a corresponding configuration mode may be determined between the first access network device and the second access network device in a default manner. For example, if the first indication information does not include frequency information of the resources in the first cell that are adjusted by the first access network device or the bandwidth information of the resources in the first cell that are adjusted by the first access network device, the second access network device may consider by default that the frequencies of the resources in the first cell that are adjusted by the first access network device are start frequencies corresponding to downlink frequency bands in the cell, and the bandwidths of the resources in the first cell that are adjusted by the first access network device are bandwidths corresponding to downlink frequency bands in the cell, and the rest may be deduced likewise. Alternatively, one or more fixed resource adjustment schemes may also be protocol-defined between access network devices, resource adjustment scheme information may be directly interacted between access network devices, or only index information corresponding to the resource adjustment scheme is interacted between access network devices. In this way, information of resource adjustment is notified to a peer. Assuredly, if only one resource adjustment scheme is available, the peer only needs to be notified as whether to adjust resources.

Correspondingly, the second access network device may acquire, according to the indication of the first indication information, information of adjustment of PRBs in the first cell by the first access network device. For example, the second access network device may determine, according to the adjustment quantity of physical resource blocks PRBs in the first cell that are adjusted by the first access network device indicated in the first indication information, the adjustment positions where PRB configuration of the corresponding radio link is to be adjusted, and adjust the PRB configuration of the radio link according to the determined adjustment positions. In addition, the second access network device may also feed back information of the adjustment positions of the PRBs of the radio link adjusted by itself to the first access network device. Alternatively, the second access network device may determine, according to the adjustment positions of PRBs in the first cell that are adjusted by the first access network device indicated in the first indication information, the adjustment positions where PRB configuration of the corresponding radio link is to be adjusted, and adjust the PRB configuration of the radio link according to the determined adjustment positions. In addition, the second access network device may also feed back information of the adjustment positions of the PRBs of the radio link adjusted by itself to the first access network device.

Alternatively, when a third access network device is a neighbor access network device of the second access network device, the first access network device may also send adjustment quantity information of the PRBs to the third access network device according to interference to the second access network device, the second access network device may selectively sends adjustment position information of the PRBs to the third access network device, and the third access network device may also perform corresponding adjustment accordingly to reduce the interference.

In an application scenario, the first message carrying the first indication information may be, for example, an eNB configuration update message, a cell activation request message, other message defined in the standards, or a newly added message. In addition, the first message may also carry one or more types of the following information: usage information (for example, indicating that the resources are used to configure a cell access link in a cell, and/or a radio backhaul link, and/or, energy saving configuration) of the resources in the first cell that are adjusted by the first access network device, activation time information of adjustment of the resources in the first cell, and configuration information of the guard period between uplink and downlink.

Before sending the first message to the second access network device, the first access network device may also receive usage status indication information of uplink and/or downlink resources of the second access network device; or receive usage status indication information of uplink and/or downlink resources of the second access network device and usage status indication information of uplink and/or downlink resources of an access network device neighboring to the second access network device, and accordingly acquire whether the uplink and/downlink resources on the second access network device are sufficient and acquire possible interference existing between the second access network and its neighbor access network device.

In an application scenario, before sending the first message to the second access network device, the first access network device may also receive cell configuration capability information of the second access network device, where the cell configuration capability information may include transmitter configuration information (for example, the number of transmitters) and/or receiver configuration information (for example, the number of receivers); and/or receive cell configuration information of an inactivated cell sent from the second access network device, where the cell configuration information includes one or more types of the following information: public land mobile network (PLMN, Public Land Mobile Network) identifier, physical layer cell identifier, upper-layer cell identifier, cell mode information, and cell state information.

120. The first access network device receives a second message sent from the second access network device, where the second message carries second indication information, the second indication information indicating adjustment positions of PRBs of at least one radio link that are adjusted by the second access network device according to the first indication information.

In practice, the second indication information may also be any information capable of indicating adjustment positions (indication of the adjustment positions means indication of the adjustment quantity) of PRBs in the radio link that are adjusted by the second access network device to the first access network device. The second indication information includes, for example, one or more types of the following information: frequency information of the adjusted resources of the radio link, bandwidth information of the adjusted resources of the radio link, uplink and/or downlink timeslot position information of the adjusted resources of the radio link, and timeslots offset information of the adjusted resources of the radio link.

The second message carrying the second indication information may be, for example, an eNB configuration update message, a cell activation response message, other message defined in the standards, or a newly added message. In addition, the second message further carries: usage information (for example, indicating that the resources are used to configure an access link in a cell, and/or a radio backhaul link, and/or energy saving configuration) of the adjusted resources of the radio link, and/or activation time information of adjustment of the resources of the radio link.

In an application scenario, the first access network device may monitor usage rate of the uplink/downlink PRBs in the first cell; if it is determined, according to the monitored usage rate of the uplink/downlink PRBs in the first cell, that redundant uplink/downlink PRBs exist in the first cell, the number of configured PRBs in the first cell may be reduced, and the first indication information may indicate the number of configured uplink/downlink physical resource blocks PRBs in the first cell to be reduced by the first access network device; if it is determined, according to the monitored usage rate of the uplink/downlink PRBs in the first cell, that the uplink/downlink physical resource blocks are insufficient, the first indication information may indicate the number of configured uplink/downlink physical resource blocks PRBs in the first cell to be increased by the first access network device; and after the second message sent from the second access network device is received, the number of configured uplink/downlink PRBs in the first cell may be increased.

It should be noted that if the first access network device and the second access network device are both base stations, information interaction may be implemented using a direct interface (for example, an X2 interface, an Iur interface, an Iub interface, or an air interface) between the base stations, or by using an indirect interface (for example, an S1 interface or an Iu interface) between the base stations.

In an application scenario, after sending the first message to the second access network device or after receiving the second message sent from the second access network device, the first access network device sends serving cell configuration update information to part of or all user terminals served by the first access network device by using a system message or dedicated signaling, where the serving cell configuration update information includes one or more types of the following information: uplink and/downlink frequency information of the adjusted resources in the first cell, uplink and/or downlink bandwidth information of the adjusted resources in the first cell, uplink and/or downlink position information of the mute timeslots after the resources in the first cell are adjusted, activation time information of adjustment of the resources in the first cell, and configuration information of the guard period between uplink and downlink. Correspondingly, the UE may acquire information of resource adjustment in the first cell.

In an application scenario, after receiving the second message sent from the second access network device, the first access network device may also send neighbor cell configuration update information to part of or all user terminals served by the first access network device by using a system message or dedicated signaling, where the neighbor cell configuration update information may include one or more types of the following information: frequency information of resources in a neighbor cell, bandwidth information of the resources in the neighbor cell, uplink and/or downlink timeslot position information of the resources in the neighbor cell, and timeslots offset information of the resources in the neighbor cell that are adjusted by the second access network device; and activation time information of adjustment of the resources in the neighbor cell. Correspondingly, the UE may acquire information of resource adjustment in the neighbor cell.

In an application scenario, after receiving the second message sent from the second access network device, the first access network device may also send radio backhaul link configuration information to part of or all user terminals served by the first access network device by using a system message or dedicated signaling, where the radio backhaul link configuration information includes one or more types of the following information: frequency information of adjusted resources of a radio backhaul link, bandwidth information of the adjusted resources of the radio backhaul link, timeslot position information of the adjusted resources of the radio backhaul link, timeslots offset information of the adjusted resources of the radio backhaul link, and activation time information of adjustment of the resources of the radio backhaul link. Correspondingly, the UE may acquire information of resource adjustment of the radio backhaul link.

In an application scenario, if the PRBs in the first cell that are adjusted by the first access network device are used for the second access network device to configure a radio access link, a position relationship of uplink and/or downlink resources in the first cell that are adjusted by the first access network device satisfies a radio access link of a cell configured by the second access network device as compatible with time division duplexing (TDD, Time Division Duplexing) configuration; or a position relationship of uplink and downlink resources in the first cell that are adjusted by the first access network device satisfies a radio access link of a cell configured by the second access network device as compatible with non-TDD configuration. Correspondingly, the second access network device may correspondingly configure a radio access link for a cell compatible with TDD configuration or correspondingly configure a radio access link for a cell compatible with non-TDD configuration at the positions of the uplink and/or downlink resources in the first cell that are adjusted by the first access network device.

In an application scenario, the first access network device may also carry a guard period configuration indication in the first message for instructing the second access network device to configure a guard period for a downlink radio access link and an uplink radio access link in a cell, where the guard period configuration indication is used to indicate that data is not transmitted on one or more neighbor downlink transmission symbols and/or uplink transmission symbols so that the one or more neighbor downlink transmission symbols and/or uplink transmission symbols are used as the guard period, or one or more neighbor downlink transmission symbols and/and uplink transmission symbols are shifted forward or backward by one or more symbols so that mute transmission symbols caused by shifting are used as the guard period. Correspondingly, the second access network device may set the guard period accordingly. Assuredly, the second access network device may also self-define how to set a guard period.

In an application scenario, if the resources adjusted by the first access network device are uplink resources in the first cell, and the adjusted uplink resources are used to configure a radio backhaul link between the first access network device and the second access network device, downlink timeslot positions of the radio backhaul link configured between the first access network device and the second access network device satisfy part of or all downlink timeslot positions in TDD configuration-compatible mode on the first access network device and the second access network device, and uplink timeslot positions of the radio backhaul link configured between the first access network device and the second access network device satisfy part of or all uplink timeslot positions in TDD configuration-compatible mode on the first access network device and the second access network device.

The second access network device may configure positions of the remaining uplink timeslots after the radio backhaul link is configured as uplink timeslots of the radio access link.

In an application scenario, if the resources adjusted by the first access network device are uplink resources and/or downlink frequency band resources of the first cell, and the adjusted uplink resources and/or downlink frequency band resources of the first cell are used to configure a radio access link and a radio backhaul link between the first access network device and the second access network device, timeslot positions of a downlink backhaul link configured between the first access network device and the second access network device are correspondingly part of or all uplink timeslot positions of a radio access link configured on the second access network device, where the uplink timeslot positions of the radio access link satisfy uplink timeslot positions in TDD configuration-compatible mode or in non-TDD configuration-compatible mode; timeslot positions of an uplink backhaul link configured between the first access network device and the second access network device are correspondingly part of or all downlink timeslot positions of the radio access link configured on the second access network device, where the downlink timeslot positions of the radio access link satisfy downlink timeslot positions in TDD configuration-compatible mode or in non-TDD configuration-compatible mode; and part of downlink timeslots of an uplink radio backhaul link configured between the first access network device and the second access network device, and of the radio access link configured on the second access network device are multiplexed in time-domain, frequency domain, or resource block mode.

As seen from the above, in the solution provided in this embodiment, the first access network device with redundant uplink and/or downlink resources in a cell adjusts resource configuration in the cell and provides part of or all the redundant resources in the cell for the second access network device neighboring to the first access network device to configure a radio access link and/or a radio backhaul link for the cell. The second access network device correspondingly adjusts, according to the adjustment of the resource configuration in the cell performed by the first access network device, resource configuration of the radio access link and/or the radio backhaul link of the cell. This mechanism helps improve usage efficiency of resources and enhance system performance and quality of service.

The following describes, from the perspective of an access network device receiving a spectrum resource, an embodiment illustrating a method for adjusting configuration of a spectrum resource according to the present invention. The method includes: receiving, by a second access network device, a first message sent from a first access network device, where the first message carries first indication information, the first indication information indicating an adjustment quantity of physical resource blocks PRBs in a first cell that are adjusted by the first access network device; adjusting positions of PRBs of a radio link according to the adjustment quantity of physical resource blocks PRBs in the first cell that are adjusted by the first access network device indicated by the first indication information; and sending a second message to the first access network device, where the second message carries second indication information, the second indication information indicating adjustment positions of the PRBs of the radio link that are adjusted by the second access network device according to the first indication information.

In an application scenario, if the adjusted radio link includes a cell radio access link, after adjusting the positions of the PRBs of the radio link, the second access network may send serving cell configuration update information to part of or all user terminals served by the second access network device by using a system message or dedicated signaling, where the serving cell configuration update information includes one or more types of the following information: uplink and/or downlink frequency information of adjusted resources of a cell radio access link, uplink and/or downlink bandwidth information of the adjusted resources of the cell radio access link, and activation time information of adjustment of the resources of the cell radio access link.

In an application scenario, after receiving the first message sent from the first access network device, or after sending the second message to the first access network device, the second access network device may also send neighbor cell configuration update information to part of or all user terminals served by the second access network device by using a system message or dedicated signaling, where the neighbor cell configuration update information includes one or more types of the following information: frequency information of the adjusted resources in the first cell, bandwidth information of the adjusted resources in the first cell, uplink and/or downlink timeslot position information of the adjusted resources in the first cell, timeslots offset information of the adjusted resources in the first cell, activation time information of adjustment of the resources in the first cell, and configuration information of guard period between uplink and downlink.

In an application scenario, if the adjusted radio link includes a radio backhaul link, after adjusting the positions of the PRBs of the radio link, the second access network device may also send radio backhaul link configuration update information to part or all user terminals served by the second access network device by using a system message or dedicated signaling, where the radio backhaul link configuration update information includes one or more types of the following information: frequency information of the adjusted resources of the radio backhaul link, bandwidth information of the adjusted resources of the radio backhaul link, uplink and/or downlink timeslot position information of the adjusted resources of the radio backhaul link, timeslots offset information of the adjusted resources of the radio backhaul link, and activation time information of adjustment of the resources of the radio backhaul link.

### Embodiment 2

For a better understanding, the following describes the technical solution provided in this embodiment by using the process that a macro base station provides its redundant UL spectrum resource for a Pico base station to apply the resources to an access link thereof as an example.

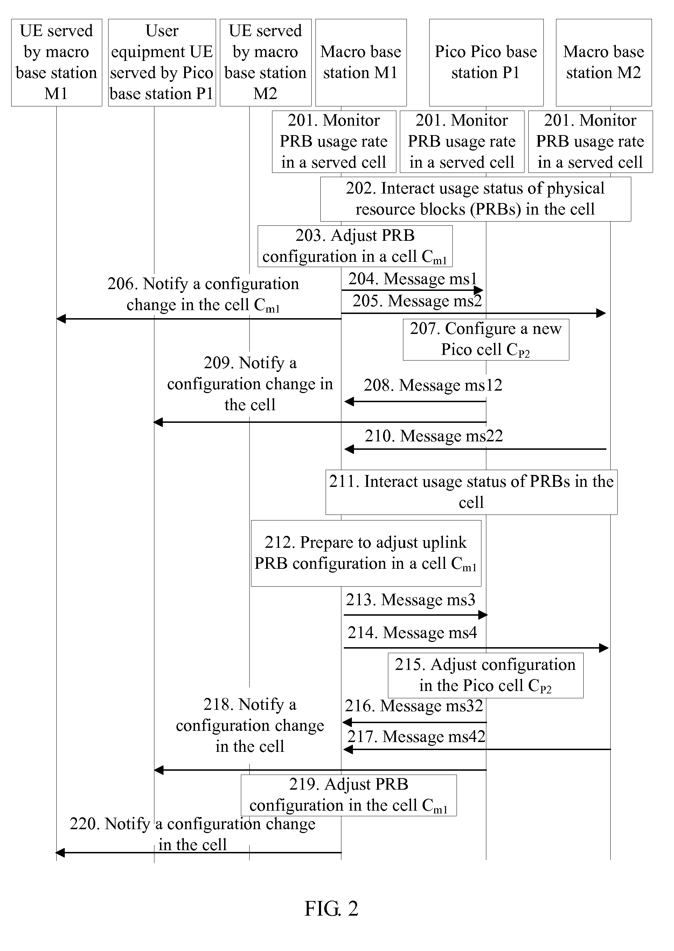

Referring to FIG. 2, for example, a macro base station M1 and a macro base station M2 are neighbor base stations of a pico (Pico) base station P1, and another embodiment illustrating a method for adjusting configuration of a spectrum resource according to the present invention may specifically include:
201. The macro base station M1 and the Pico base station P1 monitor usage rate of PRBs in their served cells. Optionally, the macro base station M2 may also monitor usage rate of PRBs in its served cell.

In practice, the base station in the network may collect statistics for the number of used uplink/downlink PRBs in one or more of its served cells within a unit duration (the unit duration may be several timeslots, several minutes, tens of minutes, or any other duration), and calculate the usage rate (the following uses R_{URB} to indicate the usage rate of the uplink PRBs) of the uplink/downlink PRBs in the one or more cells within the unit duration. R_{URB} is equal to the ratio of the number of used uplink PRBs in the cell within the unit duration to the total number of PRBs in the cell within the unit duration.

Because the total number of PRBs in a cell is determined by the bandwidth of the cell, the usage rate of the uplink/downlink PRBs may also be determined by the number of used PRBs. In this case, usage rate of PRBs = number of used PRBs/total number of PRBs (determined by the cell bandwidth). This embodiment of the present invention uses the PRB usage rate as an example, and the number of used PRBs is similar, which is not detailed here again.

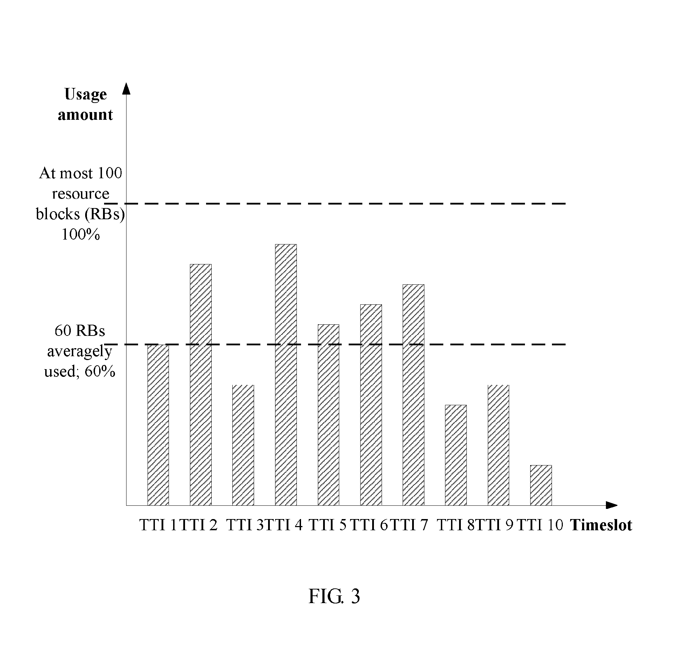

For details about the method for calculating R_{URB}, reference may be made to FIG. 3. For example, assume that the unit duration is 20 timeslots (10 TTIs), the base station can calculate the number of used uplink PRBs with each two timeslots in a cell served by the base station, and R_{URB} is equal to the ratio of the number of used uplink PRBs in 20 timeslots in the cell to the total number of uplink PRBs in 20 timeslots in the cell.

In practice, redundancy decision thresholds R_{RB}-1 (for example, 90%, 80% or another value) and R_{RB}-2 (for example, 95%, 100% or another value) may be set according to specific application scenarios. If R_{URB} is smaller than the threshold R_{RB}-1, redundant PRBs exist in the cell served by the base station, and if R_{URB} is smaller than R_{RB}-2, uplink PRBs in the cell served by the base station are insufficient.

Therefore, the macro base station M1 and the Pico base station P1, optionally the macro base station M2 may determine, according to the monitored usage rate of uplink/downlink PRBs in a cell, whether redundant uplink/downlink PRBs exist in the cell, or determine whether the uplink/downlink PRBs are insufficient.

It can be understood that if the base station needs to further monitor usage rate (the following uses to indicate the usage rate of downlink PRBs) of the downlink PRBs in the cell, the statistic collection and calculation methods are similar. R_{DRB} is equal to the ratio of the number of used downlink PRBs in the cell within a unit duration to the total number of downlink physical resource blocks in the cell within the unit duration. Therefore, the macro base station M1 and the Pico base station P1, optionally the macro base station M2 may also similarly determine, according to the monitored usage rate of downlink PRBs in a cell, whether redundant downlink PRBs exist in the cell, or determine whether the downlink PRBs are insufficient.

202. The macro base station M1 and the Pico base station P1 interacts with each other for the usage status of the PRBs in their served cells. Optionally, the macro base station M2 may also interact with the macro base station M1 and the Pico base station P1 for the usage status of the PRBs in their served cells.

In an application scenario, interaction of usage status of the PRBs in the neighbor cells may be implemented between base stations neighboring to each other in the network (i.e., neighbor base stations) by using a direct interface or an indirect interface (one or more) between the base stations, so that the base stations acquire the usage status of the PRBs in a neighbor cell according to the interaction information.

In practice, neighbor base stations may interact with each other for the usage status of the PRBs in a neighbor cell periodically (the specific interaction period may be set according to specific scenarios) or under triggering by one or more trigger events. For example, a trigger event C1 may be: the change amplitude of the usage rate of the uplink PRBs (and/or downlink PRBs) in a cell exceeds a preset threshold (for example, 20%, 40% or another value); a trigger event C2 may be: the change amplitude of the ratio of the uplink PRB usage rate to the downlink PRB usage rate exceeds a preset threshold (for example, 10%, 20% or another value).

For example, a cell (represented by a cell Cₘ₁, the cell Cₘ₁ is a macro cell) served by the macro base station M1 and a cell (represented by a cell Cₚ₁, the cell Cₚ₁ is a Pico cell) served by the Pico base station P1 are neighbor cells, and a cell (represented by a cell Cₘ₂) served by the macro base station M1 and the cell Cₚ₁ served by the Pico base station P1 are neighbor cells; the macro base station M1 and the Pico base station P1 may interaction with each other for the usage status of the uplink/downlink PRBs in the corresponding cells periodically or under triggering of the trigger event C1 and/or the trigger event C2, and the macro base station M1 may acquire whether the uplink/downlink PRBs in the cell Cₚ₁ served by the Pico base station P1 are sufficient.

Similarly, the macro base station M2 and the Pico base station P1 may also interact with each other for the usage status of the uplink/downlink PRBs in the corresponding cells periodically or under triggering of the trigger event C1 and/or the trigger event C2.

The macro base station M1 and the Pico base station P1 may carry a usage status indication of PRBs in a load-related message, a radio resource status indication message, or other messages involved in interaction. The usage status indication may indicate the usage rate of uplink/downlink PRBs in a cell within a unit duration, or indicate the number of used uplink/downlink PRBs in a cell within a unit duration, or indicate whether redundant uplink/downlink PRBs exist in the cell, or indicate whether the uplink/downlink PRBs in the cell are insufficient, or indicate information capable of characterizing the usage status of the uplink/downlink PRBs. The base station acquires the usage status of PRBS in a neighbor cell according to the interaction information.

Insufficiency of the downlink PRBs in a cell may be reflected by high usage rate of the downlink PRBs, or reflected by one or more pieces of the following information: Access class barring in a cell, poor quality of service of users in a cell, low user satisfaction in a cell.

In practice, to reduce signaling overhead for interaction of usage status of PRBs in cells between base stations, for example, usage of averagely 10 (or another number) corresponding PRBs serves as a class, and the base stations performs interactions when the change amplitude of the used PRBs exceeds 10 (or another number) PRBs. Interaction of usage status of PRBs between base stations may also be implemented in a manner of index indication. This greatly reduces the signaling overhead for interaction between base stations. Table 1 exemplarily shows a corresponding relationship between the index and the number of used PRBs.

**Table 1**

| Index | DL/UL | Average Number of Used PRBs |
|---|---|---|
| 0000 | DL or UL | 10 |
| 0001 | DL or UL | 20 |
| 0010 | DL or UL | 30 |
| 0011 | DL or UL | 40 |
| 0100 | DL or UL | 50 |
| 0101 | DL or UL | 60 |
| 0110 | DL or UL | 70 |
| 0111 | DL or UL | 80 |
| 1000 | DL or UL | 90 |
| 1001 | DL or UL | 100 |

For example, in the corresponding relationship given in Table 1, index 0000 indicates that averagely 10 PRBs are used, index 1000 indicates that averagely 90 PRBs are used, and the rest may be deduced likewise.

203. The macro base station M1 adjusts configuration of PRBs in the cell Cₘ₁ to provide part of or all redundant PRBs in the macro cell Cₘ₁ for a Pico base station to apply the PRBs to an access link of the cell.

In an application scenario, the macro base station M1 decides whether to reduce the number of configured downlink PRBs in the cell Cₘ₁. The decision may be performed with reference to one or more of the following three reference conditions:
Reference condition 1: Redundant uplink PRBs exist in the cell Cₘ₁ served by the macro base station M1.
Reference condition 2: Downlink PRBs in a cell (including the cell C_{P1}) neighboring to the cell Cₘ₁ and served by the Pico base station P1 are insufficient.
Reference condition 3: Neighbor base stations such as the macro base station M1 and the Pico base station P1 suffer from strong cell interference, and in this case, it is likely that the Pico base station P1 adopts the RE technology in the cell C_{P1}.(Because offset configuration for cell reselection and configuration for measurement report with regard to neighbor cells (including the cell C_{P1}) are provided in the cell Cₘ₁, the macro base station M1 may accordingly acquire whether the neighbor cell C_{P1} of the cell Cₘ₁ adopts RE configuration.)

Reference condition 1 is mandatory, and reference conditions 2 and 3 are optional.

The macro base station M1 may acquire usage status of PRBs in the cell Cₘ₁ and Cₚ₁ by using step 201 and step 202. The macro base station M1 may decide whether to adjust configuration of the PRBs in the cell Cₘ₁ according to reference condition 1, or reference conditions 1 and 2, or reference conditions 1 and 3, or reference conditions 1, 2 and 3. When the reference condition is satisfied, the macro base station M1 may determine to reduce the number of configured uplink PRBs in the cell Cₘ₁ to provide part of or all redundant PRBs in the cell Cₘ₁ for a Pico base station to apply the PRBs to an access link of the cell.

For ease of understanding, the following gives further description using an assumption that the macro cell Cₘ₁ and the Pico cell Cₚ₁ are both FDD cells, and cell spectrum resource deployment in the initial network state may be illustrated in FIG 4-a or FIG. 4-b.

In the initial network state illustrated in FIG. 4-a and FIG. 4-b, deployment of uplink and downlink frequency bands in the macro cell Cₘ₁ and the Pico cell Cₚ₁ may be the same, with 20M bandwidth in both uplink and downlink frequency bands, that is, spectrum configuration in the block marked by dashed lines exists in the Pico cell. Alternatively, the deployment may be different, for example, spectrum configuration in the block marked by dashed lines does not exist in the Pico cell.

The macro base station M1 may adjust positions (including quantity) of the PRBs in the macro cell Cₘ₁ in a plurality of manners according to redundancy of the uplink resources in the macro cell Cₘ₁ to reduce the number of configured uplink PRBs in the macro cell Cₘ₁ to provide part of or all redundant uplink PRBs in the macro cell Cₘ₁ for the Pico base station P1 to apply the PRBs to the cell access link thereof. The Pico base station P1 may correspondingly deploy one (or more) new cell (may be referred to as a cell Cₚ₂) in TDD configuration-compatible mode or non-TDD configuration-compatible mode according to position adjustment of the PRBs in the macro cell Cₘ₁ performed by the macro base station M1. It can be understood that the cell Cₚ₂ newly deployed by the Pico base station P1 and the macro cell Cₘ₁ are neighbor cells.

The following describes changes of network deployment status by using a heterogeneous network as an example. The case of a homogeneous network is similar to that of the heterogeneous network.

### Adjustment scenario 1:

The macro base station M1 may reduce the number of subframes corresponding to all FDD uplink frequency bands in the macro cell Cₘ₁ to provide the redundant subframes for a neighbor cell Cₚ₂ to configure downlink timeslots. For example, network cell deployment status changes from the scenario illustrated in FIG. 4-a to the scenario illustrated in FIG. 4-c or FIG. 4d.

In the scenario illustrated in FIG. 4-c, the macro base station M1 adjusts positions of FDD uplink subframes in the macro cell Cₘ₁ so that the Pico base station P1 can deploy the new cell Cₚ₂ in TDD mode. FIG. 4-c uses a case where the macro base station M1 sets subframes 0, 1, 5 and 6 in the uplink subframes to null so that the Pico base station P1 configures the subframes to downlink subframes in the neighbor cell Cₚ₂ as an example for description. Assuredly, other TDD cell configuration modes may also be used, which are similar and thus not detailed here again. As shown in Table 2, in the currently defined TDD mode, assignment ratio relationships between uplink and downlink timeslots include the following seven types. Any configuration mode satisfying the following seven timeslot assignment ratio relationships in the same frequency band is TDD-compatible configuration.

**Table 2**

| TDD Configuration Mode | Uplink and Downlink Conversion Period | Subframe Type (S/D/U) | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

In Table 2, D indicates an uplink subframe, U indicates a downlink subframe, S indicates a conversion subframe, the conversion subframe may be considered as a downlink subframe. FIG. 4-c is corresponding to TDD configuration 0 in Table 2.

Meanwhile, to prevent interference caused by uplink data transmission from the macro cell Cₘ₁ to downlink data reception in the neighbor cell Cₚ₂ at the same frequency, the macro cell Cₘ₁ does not send service data at the FDD uplink timeslot position corresponding to the downlink transmission timeslot in the cell Cₚ₂, and may send control signaling on the uplink control channel corresponding to the timeslot.

In scenarios illustrated in FIG. 4-a and FIG. 4-c, the Pico base station may serve only a cell on the FDD UL spectrums or serve other FDD cells besides the cell on the FDD UL spectrums. Positions of the uplink subframes in the FDD cell and the uplink subframes in the newly deployed cell share the same resources.

When the scenario illustrated in FIG. 4-a changes to the scenario illustrated in FIG. 4-c, the change of assignment ratio of different TDD uplink and downlink subframes (timeslots) in the macro cell and/or Pico cell may be as shown in Table 3.

**Table 3**

| TDD Configuration | Subframe Type (S, D, U) | | | | | | | | | | Pico Downl -ink | Pico Uplin k | DL: UL | Macro Downlink | Macro Uplink | DL: UL |
|---|---|---|---|---|---|---|---|---|---|---|---|---|---|---|---|---|
| 0 | D | S | U | U | U | D | S | U | U | U | 12 | 6 | 2:1 | 10 | 6 | 5:3 |
| 1 | D | S | U | U | D | D | S | U | U | D | 14 | 4 | 7:2 | 10 | 4 | 5:2 |
| 2 | D | S | U | D | D | D | S | U | D | D | 15 | 2 | 15:2 | 10 | 2 | 5:1 |
| 3 | D | S | U | U | U | D | D | D | D | D | 16 | 3 | 16:3 | 10 | 3 | 10:3 |
| 4 | D | S | U | U | D | D | D | D | D | D | 17 | 2 | 17:2 | 10 | 2 | 5:1 |
| 5 | D | S | U | D | D | D | D | D | D | D | 18 | 1 | 18:1 | 10 | 1 | 10:1 |
| 6 | D | S | U | U | U | D | S | U | U | D | 13 | 5 | 13:5 | 10 | 5 | 2:1 |

In the scenario illustrated in FIG. 4-d, the macro base station M1 adjusts positions of FDD uplink subframes in the macro cell Cₘ₁ so that the Pico base station P1 can deploy the new cell Cₚ₂ in non-TDD configuration-compatible mode (a flexible configuration mode). FIG. 4-d uses a case where the macro base station M1 sets the first four subframes in the uplink subframes to null so that the Pico base station P1 configures the subframes to downlink subframes in the neighbor cell Cₚ₂. Assuredly, other non-TDD-compatible cell configuration modes may also be used, which are similar and thus not detailed here again.

In practice, the base station sends signals to a user equipment in the downlink timeslots, the downlink signal will pass through specific channels, thereby resulting in a transmission delay when arriving at the user. The user equipment sends signals in the uplink timeslots. Similarly, the signals will also arrive at the base station a specific transmission delay later. To ensure a consistent arrival time of the uplink signals of all users at the base station end, the user equipment needs to send the uplink signals to the base station in advance by the delay. Generally, it may be considered that the uplink and downlink transmission delays are the same, and the maximum transmission delay is related to the radius R of a cell. With regard to a TDD user, specific conversion time is needed for conversion from a signal receiving state to a signal sending state.

In TDD configuration mode illustrated in FIG. 4-c, a guard period (GP) between uplink and downlink may reuse the GP in the TDD system. In non-TDD configuration-compatible mode illustrated in FIG. 4-d, the GP is reconfigured because a TDD configuration relationship failing to comply with the standard definition exists due to the downlink timeslots.

The GP between the downlink timeslots to the uplink timeslots on the FDD UL carrier may be obtained in the following two manners:
Manner 1: Setting null (removing) one or more downlink OFDM symbols or uplink OFDM symbols at the position where downlink timeslots are neighboring to uplink timeslots, to obtain a guard period between the downlink timeslots and the uplink timeslots. For example, in the scenario illustrated in FIG. 4-d, the base station may remove part of OFDM symbols at the tail position of the downlink subframes or start position of the uplink subframes in the cell Cₚ₂ in the FDD UL 20M frequency band, to use the removed symbols as a GP between downlink-uplink conversion time and uplink-downlink conversion time. The GP may also be used to prevent interference caused between base stations (interference between uplink and downlink). The GP needs to consider N circles of macro base stations. For example, if the radius of a macro base station is R, GP = N * 2 * R/C, where C indicates the light speed.
Manner 2: Shifting the downlink timeslots or uplink timeslots in the FDD UL carrier frequency band forward/backward by N OFDM symbols so that the N mute OFDM symbols are used as the GP.

In the above two manners, removing or shifting of the N symbols may be configured, or may be implemented by several preset configuration modes. The base station may notify the corresponding configuration mode or the index of the configuration mode to its served user equipment, and the user equipment acquires information of the GP configuration accordingly.

### Adjustment scenario 2:

The macro base station M1 may reduce the number of subframes corresponding to part of FDD uplink frequency bands in the macro cell Cₘ₁ to provide the redundant subframes to a neighbor cell Cₚ₂ for configuring downlink timeslots. For example, network cell deployment status changes from the scenario illustrated in FIG. 4-b to the scenario illustrated in FIG. 4-e, FIG. 4-f, FIG. 4-g or FIG. 4-h.

In the scenario illustrated in FIG. 4-e or FIG, 4-f, the macro base station M1 adjusts positions of FDD uplink subframes in the macro cell Cₘ₁ so that the Pico base station P1 can deploy the new cell Cₚ₂ in TDD-compatible mode.

FIG. 4-e and FIG. 4-f use a case where the macro base station M1 sets subframes 0, 1, 5 and 6 in the uplink subframes corresponding to part of its FDD uplink subcarriers to null so that the Pico base station P1 configures the subframes to downlink subframes in the neighbor cell Cₚ₂ as an example for description. Assuredly, other TDD-compatible cell configuration modes may also be used, which are similar and thus not detailed here again.

In the scenarios illustrated in FIG. 4-g and FIG. 4-h, the macro base station M1 adjusts positions of uplink subframes corresponding to part of the FDD uplink frequency bands in the macro cell Cₘ₁ so that the Pico base station P1 can also deploy the new cell Cₚ₂ in non-TDD-compatible mode (a flexible configuration mode). FIG. 4-g and FIG. 4-h use a case where the macro base station M1 sets first four subframes in the uplink subframes corresponding to part of its FDD uplink subcarriers to null so that the Pico base station P1 configures the subframes to downlink subframes in the neighbor cell Cₚ₂ as an example for description. Assuredly, other flexible non-TDD cell configuration modes may also be used, which are similar and thus not detailed here again.

Similarly, to prevent interference caused by uplink data transmission from the cell Cₚ₁ to downlink data transmission in the cell Cₚ₂ in the same timeslot, the Pico cell Cₚ₁ may not send data at the uplink transmission timeslot positions corresponding to the downlink transmission timeslots in the Pico cell Cₚ₂, which is illustrated in FIG. 4-e, FIG. 4-f, FIG. 4-g or FIG. 4-h. For support of the UE in an earlier version, control signaling may be sent in the set-null (removed) timeslots. However, if the interval between two corresponding uplink frequency bands is too large, the interference may be ignored. In this case, the Pico cell Cₚ₁ may send data and control signaling at the uplink timeslot positions corresponding to the downlink timeslots in the Pico cell Cₚ₂.

Further, if interference is caused between the downlink transmission timeslots in the Pico cell Cₚ₂ and the uplink transmission timeslots in the macro cell Cₘ₁ with a frequency neighboring to that of the downlink transmission timeslots, service data may not be transmitted at the uplink transmission timeslot positions in the macro cell Cₘ₁ with a frequency neighboring to that of the downlink transmission timeslots in the Pico cell Cₚ₂ to prevent mutual interference, which is, for example, illustrated in FIG. 4-f or FIG. 4-h. For support of the UE in an earlier version (that is, the UE not supporting this configuration mode), control signaling may be sent in the set-null (removed) timeslots.

When the scenario illustrated in FIG. 4-b changes to the scenario illustrated in FIG. 4-e, the change of assignment ratio of different TDD uplink and downlink subframes in the macro cell and/or Pico cell may be as shown in Table 4 (assume that each of the two subcarrier frequency bands has 10 subframes).

**Table 4**

| TDD Configuratio n | Subframe Type (D/S/U) | | | | | | | | | | Pico Downlink | Pico Uplink | DL:UL | Macro Downlink | Macro Uplink | DL:UL |
|---|---|---|---|---|---|---|---|---|---|---|---|---|---|---|---|---|
| 0 | D | S | U | U | U | D | S | U | U | D | 12 | 6 | 2:1 | 20 | 16 | 5:4 |
| 1 | D | S | U | U | D | D | S | U | U | D | 14 | 4 | 14:4 | 20 | 14 | 10:7 |
| 2 | D | S | U | D | D | D | S | U | D | D | 15 | 2 | 15:2 | 20 | 12 | 5:3 |
| 3 | D | S | U | U | U | D | D | D | D | D | 16 | 3 | 16:3 | 20 | 13 | 10:13 |
| 4 | D | S | U | U | D | D | D | D | D | D | 17 | 2 | 17:2 | 20 | 12 | 5:3 |
| 5 | D | S | U | D | D | D | D | D | D | D | 18 | 1 | 18:1 | 20 | 11 | 20:11 |
| 6 | D | S | U | U | U | D | S | U | U | D | 12 | 5 | 13:5 | 20 | 15 | 4:3 |

When the scenario illustrated in FIG. 4-b changes to the scenario illustrated in FIG. 4-f, the change of assignment ratio of different TDD uplink and downlink subframes in the macro cell and/or Pico cell may be as shown in Table 5 (assume that each of the two subcarrier frequency bands has 10 subframes).

**Table 5**

| TDD Configuration | Subframe Type (D, S, U) | | | | | | | | | | Pico Downlink | Pico Uplink | DL:UL | Macro Downlink | Macro Uplink | DL:UL |
|---|---|---|---|---|---|---|---|---|---|---|---|---|---|---|---|---|
| 0 | D | S | U | U | U | D | S | U | U | U | 12 | 6 | 2:1 | 20 | 16 | 5:4 |
| 1 | D | S | U | U | D | D | S | U | U | D | 14 | 4 | 14:4 | 20 | 14 | 10:7 |
| 2 | D | S | U | D | D | D | S | U | D | D | 15 | 2 | 15:2 | 20 | 12 | 5:3 |
| 3 | D | S | U | U | U | D | D | D | D | D | 16 | 3 | 16:3 | 20 | 13 | 10:13 |
| 4 | D | S | U | U | D | D | D | D | D | D | 17 | 2 | 17:2 | 20 | 12 | 5:3 |
| 5 | D | S | U | D | D | D | D | D | D | D | 18 | 1 | 18:1 | 20 | 11 | 20:11 |
| 6 | D | S | U | U | U | D | S | U | U | D | 13 | 5 | 13:5 | 20 | 15 | 4:3 |

In an application scenario, when the macro base station M1 determines to provide the FDD uplink PRBs in the macro cell Cₘ₁ for configuring downlink timeslots in the Pico cell C_{P2}, the macro base station M1 may determine, according to interference conditions and/or the number of redundant PRBs, an adjustment mode to be used, and adjust the uplink PRBs in the macro cell Cₘ₁.

The following uses the adjustment schemes in adjustment scenario 1 as example for description, and operation methods described in adjustment scenario 2 are similar to those in adjustment scenario 1.

204. The macro base station M1 sends a message ms1 (for example, an eNB configuration update message, or a cell activation message, or another message) to the Pico base station P1.

The macro base station M1 may, for example, notify information of resource adjustment in the macro cell Cₘ₁ to the Pico base station P1 by using the eNB configuration update message or the cell activation message (message ms1) so that the Pico base station P1 configures a new Pico cell Cₚ₁ according to the information of resource adjustment in the macro cell Cₘ₁.

In practice, the eNB configuration update message or the cell activation message (message ms1) may carry indication information indicating an adjustment quantity of physical resource blocks PRBs in the cell Cₘ₂ that are adjusted by the macro base station M1, where the indication information may include one or more types of the following information: frequency information of the resources in the macro cell Cₘ₁ that are adjusted by the macro base station M1, bandwidth information of the resources in the macro cell Cₘ₁ that are adjusted by the macro base station M1, the number of timeslots of the resources in the macro cell Cₘ₁ that are adjusted by the macro base station M1, timeslot position information of the resources in the macro cell Cₘ₁ that are adjusted by the macro base station M1, configuration information of the guard period between uplink and downlink, subframe offset information of the resources in the macro cell Cₘ₁ that are adjusted by the macro base station M1.

Further, the eNB configuration update message or the cell activation message (message ms1) may further carry: usage information (for example, indicating that the resources are used to configure a radio backhaul link, or an access link in a Pico cell, or energy saving configuration) of the resources in the macro cell Cₘ₁ that are adjusted by the macro base station M1, and/or activation time information of adjustment of the resources in the macro cell Cₘ₁.

Further, the eNB configuration update message or the cell activation message (message ms1) may further carry: a guard period configuration indication for instructing the Pico base station P1 to configure a guard period for a downlink radio access link and an uplink radio access link in a cell, where the guard period configuration indication may be used to indicate that data is not transmitted on one or more neighbor downlink transmission symbols and/or uplink transmission symbols so that the one or more neighbor downlink transmission symbols and/or uplink transmission symbols are used as the guard period, or one or more neighbor downlink transmission symbols and/and uplink transmission symbols are shifted forward or backward by one or more symbols so that mute transmission symbols caused by shifting are used as the guard period.

Assuredly, the eNB configuration update message or the cell activation message (message ms1) may not carry one or more pieces of the above information, and corresponding configuration may be acknowledged between base stations in a default manner. For example, if the indication information does not include frequency information or bandwidth information of the resources in the macro cell Cₘ₁ that are adjusted by the macro base station M1, the Pico base station P1 may consider by default the frequencies of the resources in the macro cell Cₘ₁ that are adjusted by the macro base station M1 as start frequencies corresponding to the downlink frequency bands in the cell, and the bandwidths of the resources in the macro cell Cₘ₁ that are adjusted by macro base station M1 are bandwidths corresponding to downlink frequency bands in the cell, and the rest may be deduced likewise. Alternatively, one or more fixed resource adjustment schemes may also be protocol-defined between base stations, resource adjustment scheme information may be directly interacted between base stations, or only index information corresponding to the resource adjustment scheme is interacted. In this way, information of resource adjustment is notified to a peer. Assuredly, if only one resource adjustment scheme is available, the peer only needs to be notified as whether to adjust resources.

205. The macro base station M1 sends a message ms2 (for example, an eNB configuration update message, or a cell activation message, or another message) to the macro base station M2.

Correspondingly, the macro base station M1 may also, for example, notify information of resource adjustment in the macro cell Cₘ₁ to the macro base station M2 by using the eNB configuration update message or the cell activation message (message ms2).

In practice, the eNB configuration update message or the cell activation message (message ms2) may carry indication information indicating an adjustment quantity of physical resource blocks PRBs in the macro cell Cₘ₁ that are adjusted by the macro base station M1, where the indication information may include one or more types of the following information: frequency information of the resources in the macro cell Cₘ₁ that are adjusted by the macro base station M1, bandwidth information of the resources in the macro cell Cₘ₁ that are adjusted by the macro base station M1, the number of timeslots of the resources in the macro cell Cₘ₁ that are adjusted by the macro base station M1, timeslot position information of the resources in the macro cell Cₘ₁ that are adjusted by the macro base station M1, configuration information of the guard period between uplink and downlink, subframe offset information of the resources in the macro cell Cₘ₁ that are adjusted by the macro base station M1.

Further, the eNB configuration update message or the cell activation message (message ms2) may further carry: usage information (for example, indicating that the resources are used to configure an access link in a Pico cell, or a radio backhaul link, or energy saving configuration) of the resources in the macro cell Cₘ₁ that are adjusted by the macro base station M1, and/or activation time information of adjustment of the resources in the macro cell Cₘ₁.

Assuredly, the eNB configuration update message or the cell activation message (message ms2) may not carry one or more pieces of the above information, and corresponding configuration may be acknowledged between base stations in a default manner. For example, if the indication information does not include frequency information or bandwidth information of the resources in the macro cell Cₘ₁ that are adjusted by the macro base station M1, the macro base station M2 may consider by default the frequencies of the resources in the macro cell Cₘ₁ that are adjusted by the macro base station M1 as start frequencies corresponding to the downlink frequency bands, and the bandwidths of the resources in the macro cell Cₘ₁ that are adjusted by macro base station M1 are bandwidths corresponding to downlink frequency bands in the cell, and the rest may be deduced likewise. Alternatively, one or more fixed resource adjustment schemes may also be protocol-defined between base stations, resource adjustment scheme information may be directly interacted between base stations, or only index information corresponding to the resource adjustment scheme is interacted. In this way, information of resource adjustment is notified to a peer. Assuredly, if only one resource adjustment scheme is available, the peer only needs to be notified as whether to adjust resources.

The macro base station M2 may changes configuration of uplink PRBs in the neighbor cell of the cell C_{P2} served by the macro base station M2 by using the eNB configuration update message or the cell activation message (message ms2), to prevent interference caused to the cell.

It can be understood that information interaction may be implemented between the macro base station M1, the macro base station M2 and the Pico base station P1 by using a direct interface between the base stations, for example, an X2 interface, an Iur interface, an Iub interface or an air interface, or by using an indirect interface between the base stations, for example, an S1 interface or an Iu interface.

206. The macro base station M1 informs a UE camping in the cell Cₘ₁ of the configuration change in the cell Cₘ₁.

In an application scenario, when the macro base station M1 changes or intends to change configuration of the uplink resources in the cell Cₘ₁, if part of its served UEs (for example, UE in version R10) support the new configuration mode of the UL subframes in the cell Cₘ₁, and when a special HARQ feedback design is made for the new configuration of the uplink subframes in the cell Cₘ₁, the macro base station M1 may notify the changed configuration of the UL subframes (timeslots) in the cell Cₘ₁ to the UE in a latest version at the air interface in broadcast mode or unicast mode. However, such notification cannot be implemented for the UE in an earlier version.

The macro base station M1 may send serving cell update configuration information to part of or all UEs served by the macro base station M1, where the serving cell update configuration information includes one or more types of the following information:
uplink and/or downlink frequency information of the adjusted resources in the cell Cₘ₁, uplink and/or downlink bandwidth information of the adjusted resources in the cell Cₘ₁, uplink and/or downlink position information of the mute (mute) subframes of the adjusted resources in the cell Cₘ₁, activation time of adjustment of the resources in the cell Cₘ₁.

In a scenario where the Pico base station may be configured with non-TDD configuration-compatible cells, information may be notified at an air interface by the macro base station M1 to its served UEs in a latest version in broadcast mode (by using a system broadcast message) and in unicast mode (by using a dedicated signaling message).

If the macro base station M1 notifies information to the UE in broadcast mode, the macro base station M1 may place configuration information of the uplink mute subframes (timeslots) in the cell Cₘ₁ onto a SIB2. The format of the information is as follows:

```
     SystemInformation BlockType2 information element
     freqInfo                       SEQUENCE {
     ul-CarrierFreq   ARFCN-ValueEUTRA     OPTIONAL,-- Need OP
     ul-Bandwidth   ENUMERATED {n6, n15, n25, n50, n75, n100} OPTIONAL, -- Need OP
     Mute UL configuration          SEQUENCE {
     ul-CarrierFreq                 ARFCN-ValueEUTRA
     ul-Bandwidth                   ENUMERATED {n6, n15, n25, n50, n75, n100}
     Mute position                  BIT STRING (SIZE(10))
```

The macro base station M1 may place configuration information of the downlink mute subframes in the cell Cₘ₁ onto a MIB or the SIB2.

The configuration information is placed on the MIB in the following format:

```
              MasterInformationBlock(MIB)
     -- ASN1START
     MasterInformationBlock ::=
     SEQUENCE {
       dl-Bandwidth                 ENUMERATED {n6, n15, n25, n50, n75, n100},
       Mute UL configuration                   BIT STRING(SIZE(10))
       phich-Config                       PHICH-Config,
       systemFrameNumber                       BIT STRING(SIZE(8)),
       spareBIT STRING(SIZE(10))
     }                      -- ASN1STOP
     The configuration information is placed on the SIB2 in the following format:
    SystemInformationBlockType2 information element
     freqInfo
     SEQUENCE {
     ul-CarrierFreq                ARFCN-ValueEUTRA OPTIONAL,-- Need OP
     ul-Bandwidth                  ENUMERATED {n6, n15, n25, n50, n75, n100}
 OPTIONAL,                         -- Need OP
        Mute DL configuration      BIT STRING(SIZE(10))
```

In addition, if the macro base station M1 notifies information to the UE by using dedicated signaling, information of the uplink and downlink mute subframes in the cell Cₘ₁ may be carried in a plurality of types of downlink signalings, for example, a paging message, a connection establish message, a connection reconfigure message, a connection re-establish message, and a downlink message transmission message.

207. The Pico base station P1 configures a new Pico cell C_{P2}.

The Pico base station P1 determines, according to the uplink resources provided by the macro cell Cₘ₁, and interference caused by a neighbor cell to the macro cell Cₘ₁, to use the uplink resources provided by the macro cell Cₘ₁ to deploy the Pico cell C_{P2}. Deployment of the new Pico cell C_{P2} may be considered as adjustment of the resources of the radio access link in the cell from none to availability, or additionally adjustment from one configuration to another.

Uplink and downlink subframe (timeslot) assignment ratio in the newly deployed Pico cell C_{P2}:
The Pico base station P1 may match the number of subframes of the uplink resources provided by the macro cell Cₘ₁ with the TDD cell configuration mode, to obtain an uplink and downlink subframe assignment ratio in the Pico cell C_{P2} satisfying the TDD cell configuration mode. Alternatively, the Pico base station P1 may also determine the uplink and downlink subframe (timeslot) assignment ratio in the Pico cell C_{P2} according to HARQ timeslots and processing requirements of uplink and downlink scheduling.

The following mainly uses the case of configuring the Pico cell C_{P2} to a TDD configuration-compatible cell (that is, newly deploying a TDD cell by the Pico base station P1) as an example for description. In addition, uplink and downlink configuration in the case of configuring the Pico cell C_{P2} to a non-TDD configuration-compatible cell (that is, flexible uplink and downlink configuration) is similar.

In the scenario, for example, illustrated in FIG. 4-c, FDD UL of the macro cell Cₘ₁ can provide four downlink subframes. Because the S subframe is also considered as a downlink subframe, the four downlink subframes provided by FDD UL may include two DL subframes and two S subframes, or three DL subframes and one S subframe. In this case, the corresponding TDD configuration in Table 2 is configuration mode 0. The macro base station M1 may determine not to send service data in which subframes (timeslots) of part of or all uplink frequency bands in the macro cell Cₘ₁ according to the position relationship between uplink and downlink subframes (timeslots) in the TDD Pico cell C_{P2} configured by the Pico base station.

In the case of flexible uplink and downlink configuration (that is, configuring a non-TDD configuration-compatible cell), positions of the uplink and downlink subframes in the Pico cell C_{P2} may be determined by a valid HARQ time sequence, for example, FDD or TDD, or a combination of FDD and TDD, or a newly defined time sequence.

Previously, hardware processing capabilities (including transmission and reception capabilities, for example, the number of transmitters and/or receivers) or inactivated and incomplete cell configuration information may also be interacted between base stations. The information indicating that the base station may be added with a cell but does not have the cell configuration capability for the spectrum resource may also be notified to the neighbor base station. The interaction information may be sent during establishment of an interface between base stations, or may be interacted in subsequent interface signalings.

For example, for support of downlink sending in the FDD UL frequency band, a new transmission channel needs to be added on the base station. If the macro base station M1 (a base station providing resources) acquires that the Pico base station P1 has the capability of newly adding a transmission channel, the macro base station M1 may send a message to the Pico base station P1 in a well-targeted manner and provide FDD UL frequency band resources for the Pico base station P1.

Part of configuration information of the cell C_{P2} (although before configuration of uplink and downlink resources, the cell C_{P2} is not running and in the deactivated state) may be configured on the Pico base station P1, and the Pico base station P1 may interact with neighbor base stations (including the macro base station M1 and the macro base station M2). The part of configuration information of the cell C_{P2} interacted between the base stations may include one or more types of the following information:
physical layer cell identifier, upper-layer cell identifier, tracing area code, PLMN identifier of the cell C_{P2};
information indicating whether the working mode of the cell C_{P2} is TDD mode or FDD mode (optional);
state of the cell C_{P2} (deactivate state in the case of incomplete configuration).

In addition, if the hardware processing capabilities of the base stations are not interaction between the base stations, the base station capable of providing resources sends FDD UL resource providing information to part of or all neighbor base stations, and the neighbor base station having the corresponding hardware processing capability is capable of making a response.

In an application scenario, the macro base station M1 (a base station providing uplink FDD UL resources) sends an eNB configuration update message (message ms1) to the Pico base station P1 (a base station receiving uplink resources). The eNB configuration update message carries configuration of the adjusted FDD uplink resources in the macro cell Cₘ₁ provided by the macro base station M1, and indicates usage information of the adjusted uplink resources.

In practice, the macro base station M1 (a donor base station) may send specific TDD cell configuration to the Pico base station P1 by using the FDD information in serving cell information modified in the first eNB configuration update message (message ms1). That is, the macro base station M1 determines TDD configuration of a neighbor cell. The details are as shown in Table 6, which are, however, not limited thereto.

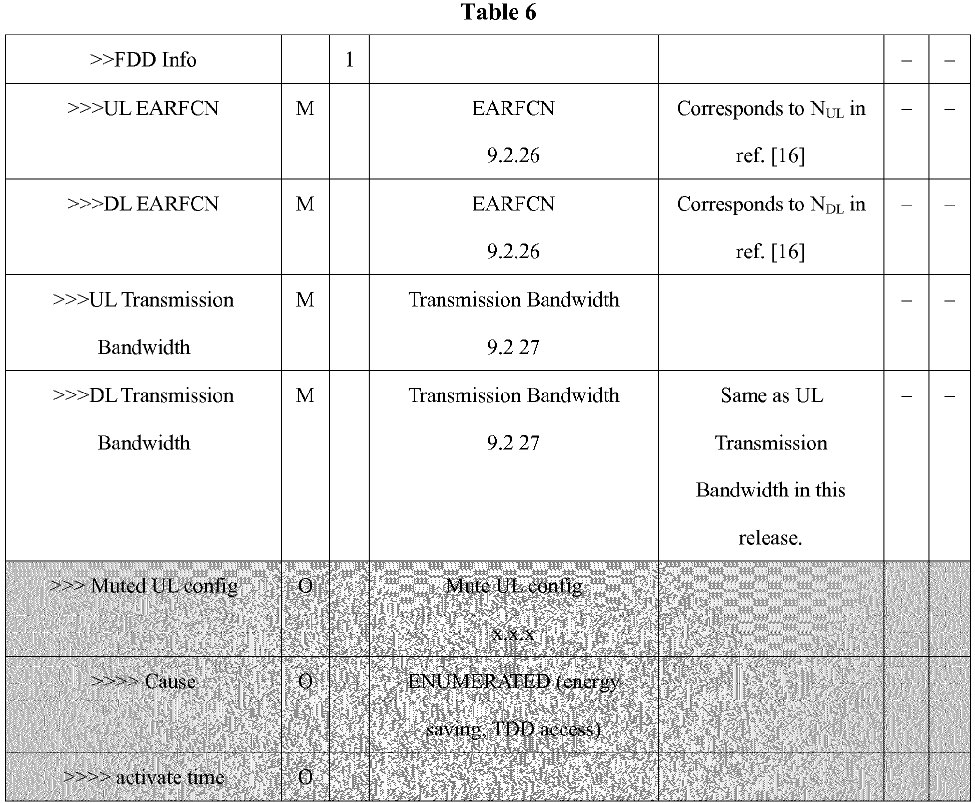

With regard to IE Muted UL config that is newly added, the specific configuration is as shown in Table 7, which is, however, not limited hereto.

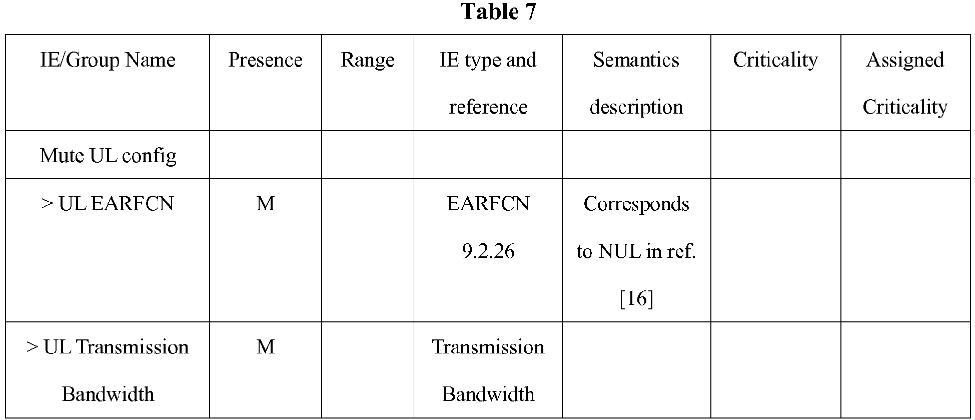

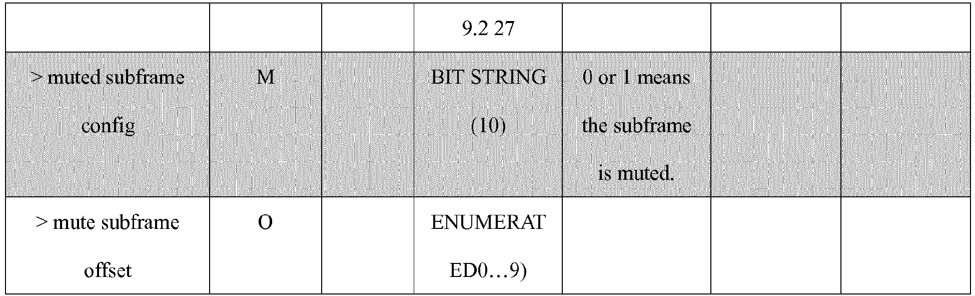

Alternatively, muted subframe configuration may be indicated not using bitmap, but using a corresponding TDD configuration mode, that is, indicating one of TDD configuration 0 to TDD configuration 6. Timeslot positions corresponding to the TDD downlink subframes are timeslot positions of the UL subframes in the macro cell Cₘ₁ that are muted by the macro base station M1.

After the neighbor Pico base station P1 receives the message carrying the above configuration information, if acquiring that the uplink resources are muted to configure a TDD access link, the Pico base station P1 may correspondingly configure the frequency and bandwidth for a TDD cell according to the uplink frequency and bandwidth in the mute uplink configuration. In addition, if the cell having the FDD UL resources determines the TDD cell configuration, the macro base station M1 may define specific timeslot positions of the mute subframes in the mute subframe configuration information. The neighbor cell of the Pico base station P1 may directly determine, according to the timeslot positions of the mute subframes, an uplink and downlink assignment ratio and the start position of the configuration of the TDD cell. Then, the Pico base station P1 configures parameters such as ECGI, PCI, TAC, and PLMN for the cell, and sends an eNB configuration update message to the neighbor base station.

In addition, in the mute uplink resource UL configuration information of a source eNB of the macro base station M1, the number of subframes may only be configured in the Mute subframe configuration. Specific TDD cell configuration is determined by the Pico base station P1 configuring the TDD cell.

In this way, the specific configuration of IE Muted UL config is shown in Table 8, which is, however, not limited hereto.

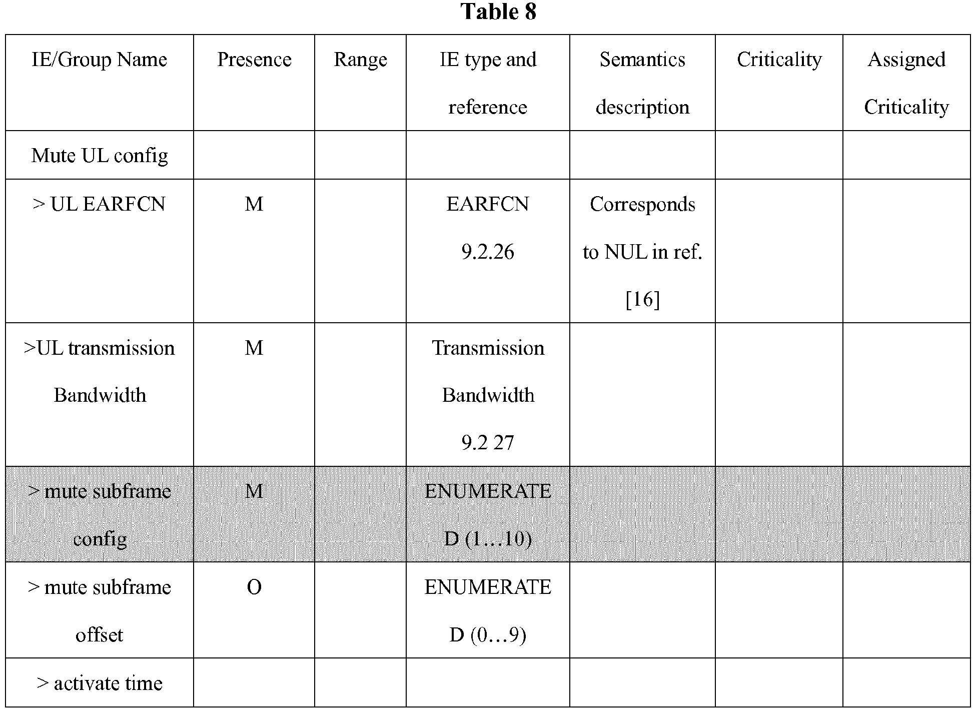

If the configuration mode shown in Table 8 is used, only after receiving the eNB configuration update message containing the TDD cell configuration sent from the Pico base station P1, the macro base station M1 performs non-scheduling operation (mute) for the uplink subframes in the macro cell Cₘ₁ according to the positions of the downlink subframes in the TDD cell configured by the Pico base station P1.

Further, the Pico base station P1 may carry detailed configuration information of a new cell in the eNB configuration update message, as shown in Table 9.

The Pico base station P1 configures the new cell in TDD mode or non-TDD-compatible mode.

In the TDD-compatible configuration mode, besides the frequency, bandwidth, TDD assignment ratio and special subframe configurations, CP is also configured. Additional configurations such as subframe configuration quantity and activation time for configuration validation may also be needed.

In the non-TDD-compatible configuration mode, besides the frequency and bandwidth, uplink and downlink subframe positions, GP configuration for conversion from downlink to uplink, and guard period between uplink and downlink also need to be newly configured. In mute symbol config, mute symbol may be configured to be uplink symbols or downlink symbols, or mute several symbols. Alternatively, moving symbols are configured to be uplink symbols or downlink symbols, or move several symbols. Scheduled SRS configuration may include whether to perform SRS configuration, and the number of configured SRS symbols.

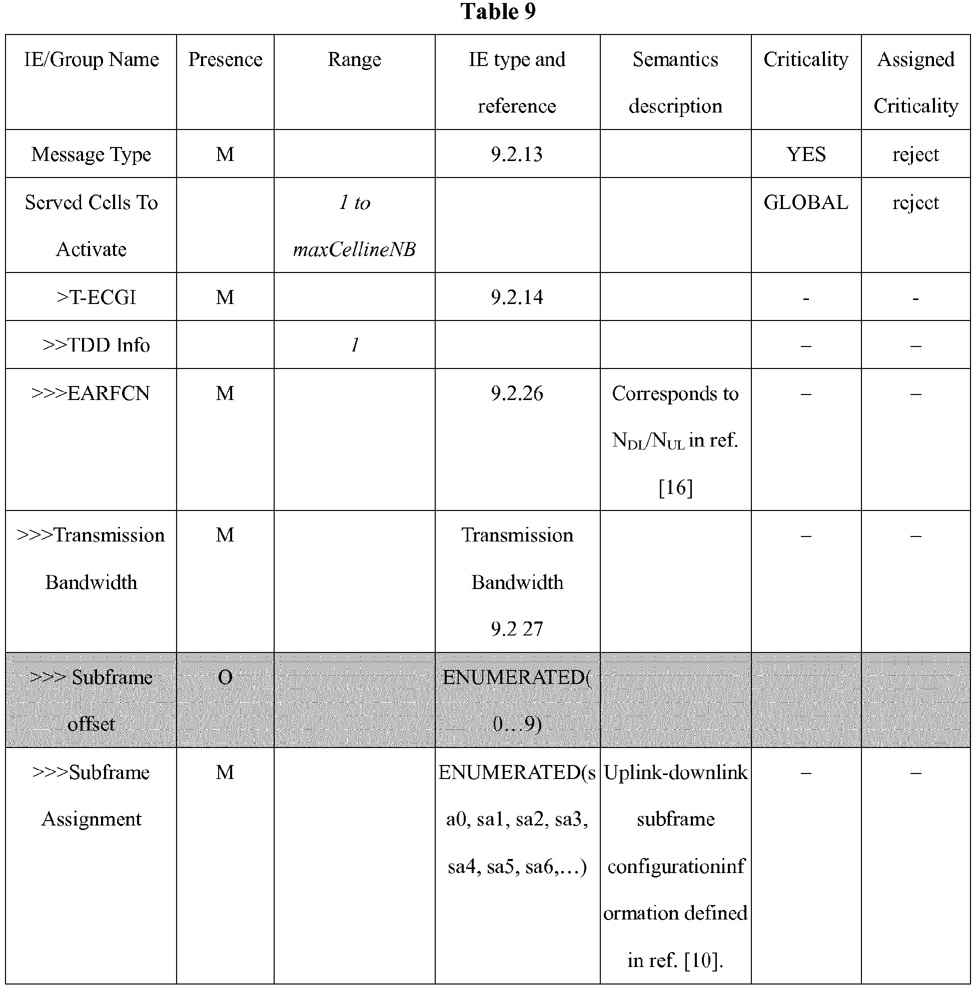

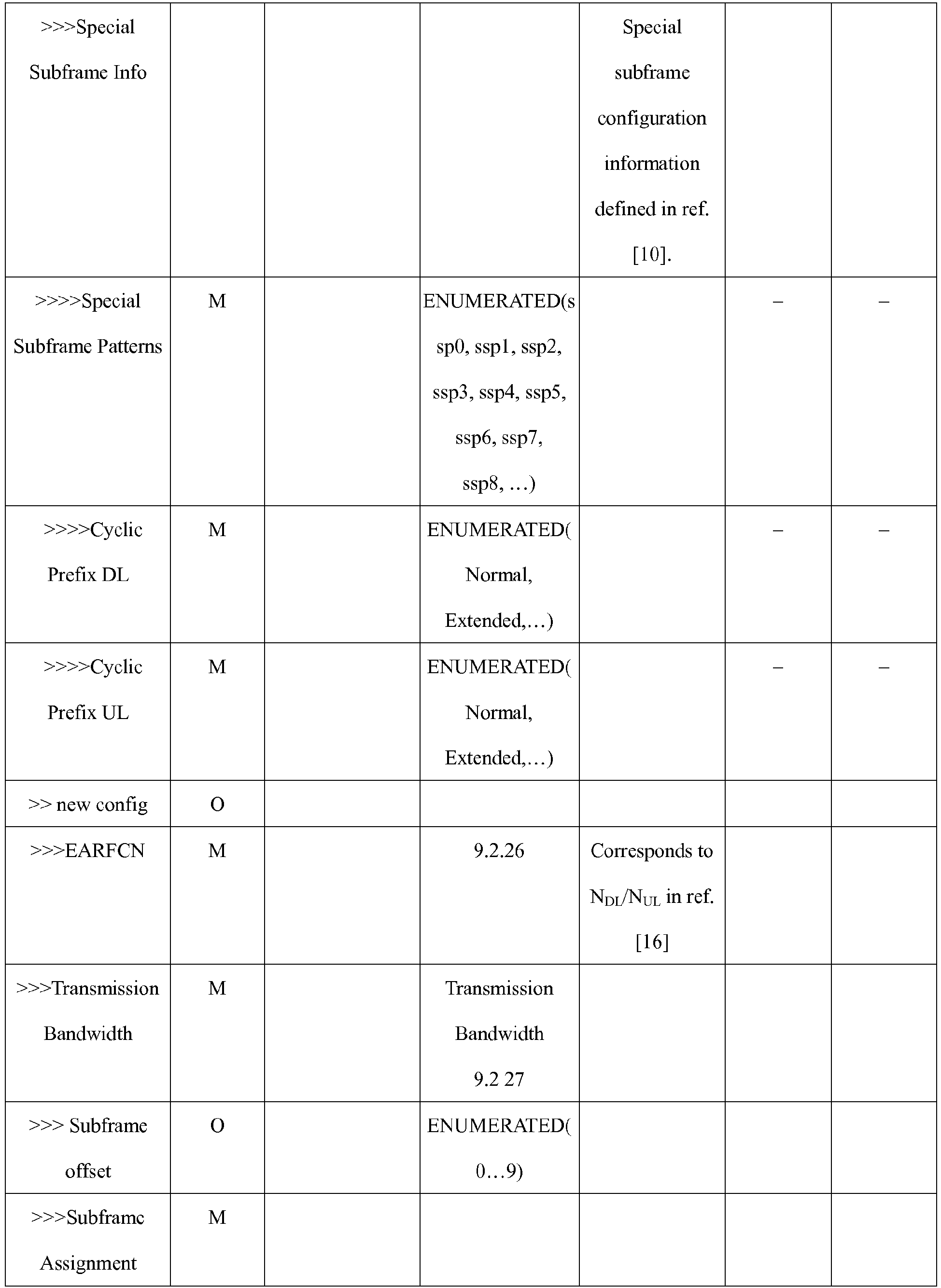

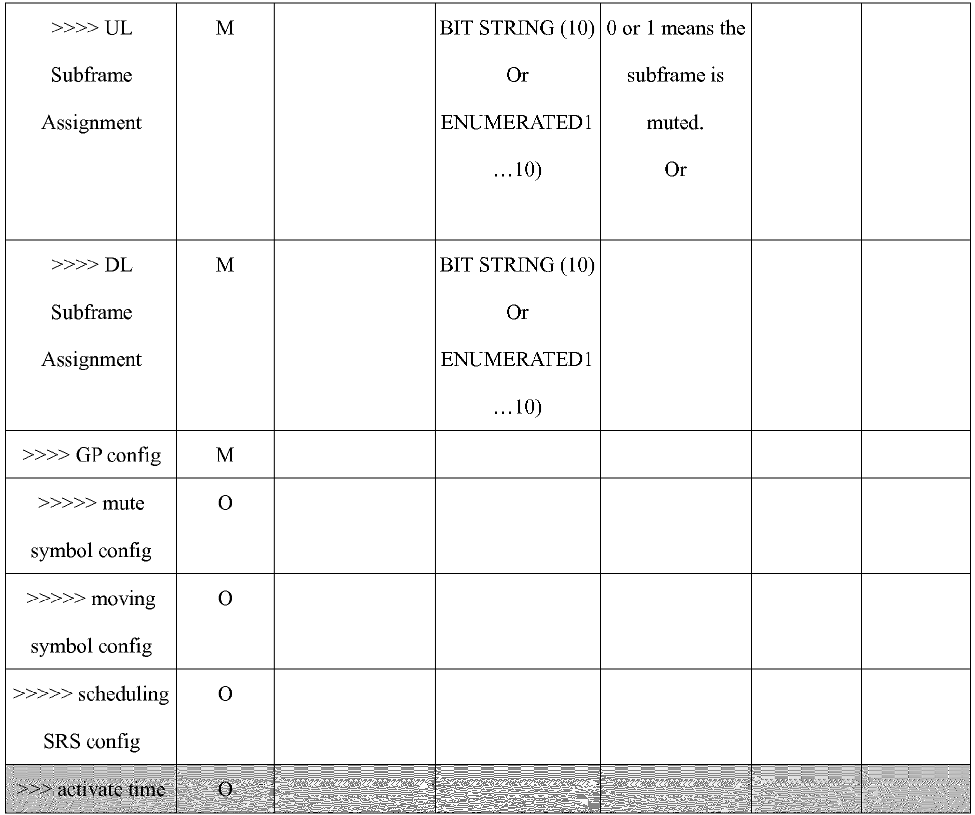

In another application scenario, the macro base station M1 may also indicate cell configuration added by the Pico base station P1; when indication instructing the neighbor Pico base station P1 to adjust configuration of a new cell is displayed, configuration of cells to be activated are added in the cell activation request message. The specific IE configuration is shown in Table 10, which is, however, not limited hereto.

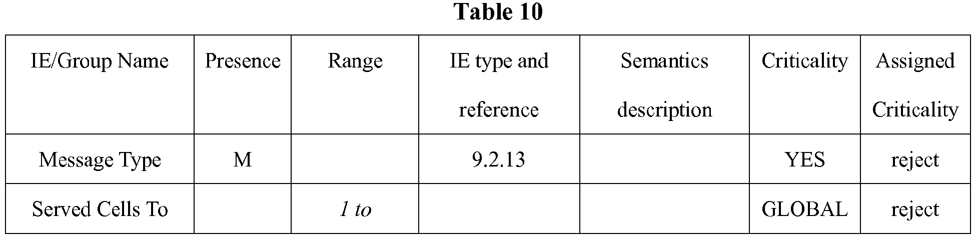

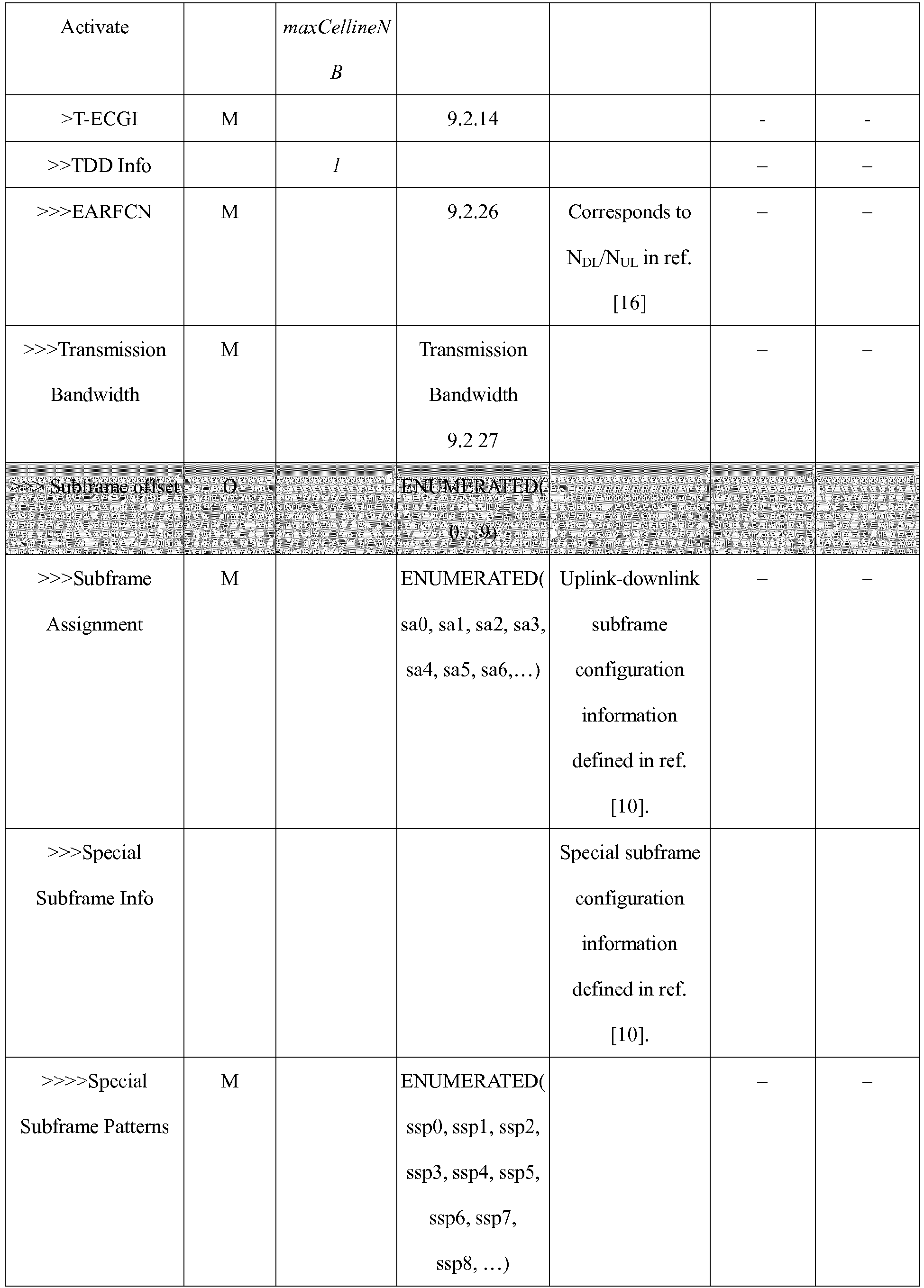

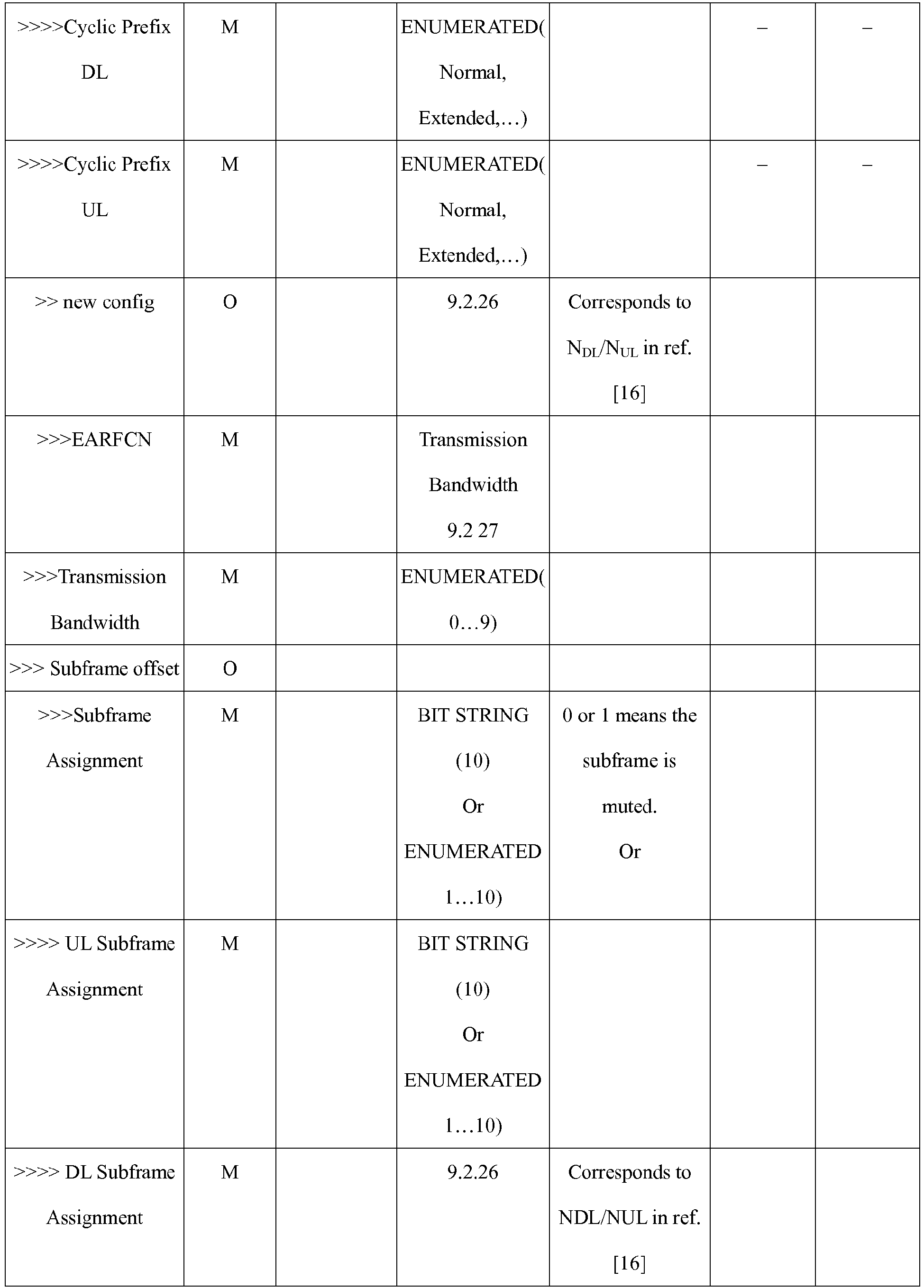

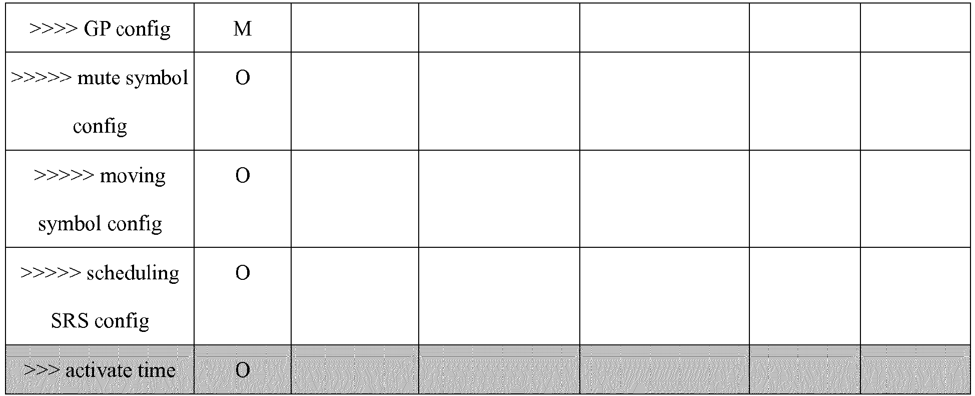

After configuring the new cell according to the configuration indicated by the macro base station M1, the Pico base station P1 may feed back acknowledgement of the adjusted cell configuration to the macro base station M1 by using X2 signaling, S1 signaling, air interface signaling, Iu signaling, Iur signaling, or Iub signaling, for example, feed back the acknowledgement of the adjusted cell configuration to the macro base station M1 by using a cell activation response message or an eNB configuration update message. The details are as shown in Table 11, which are, however, not limited hereto.

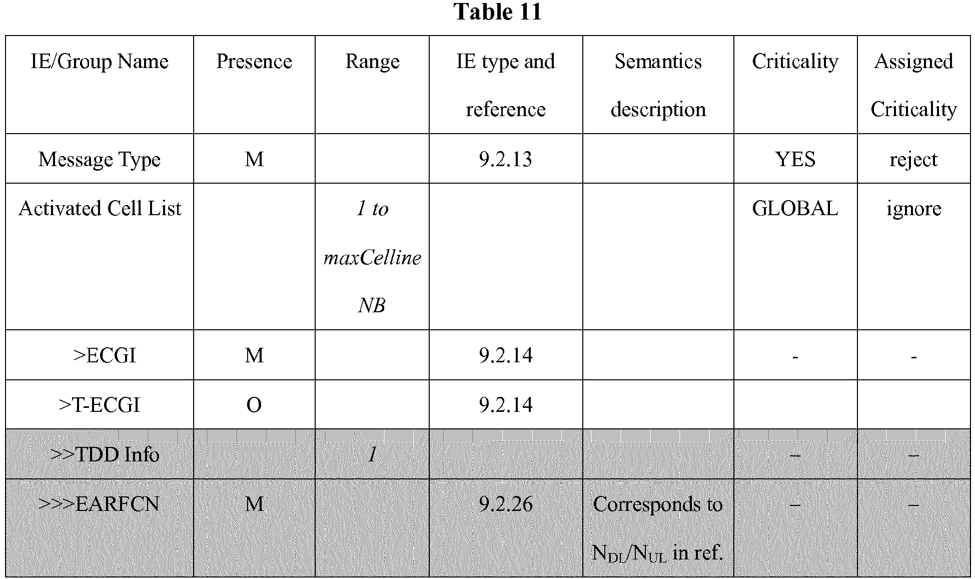

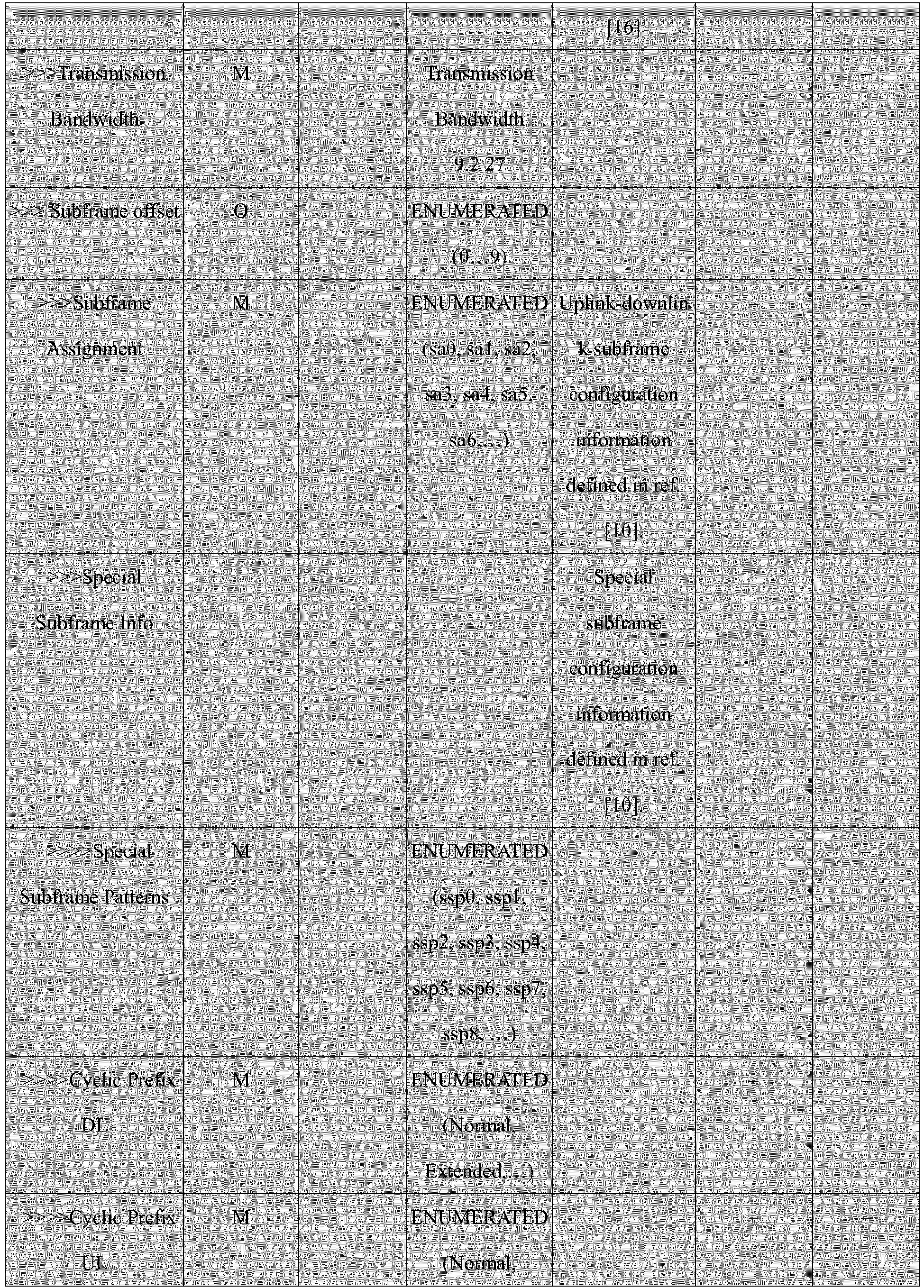

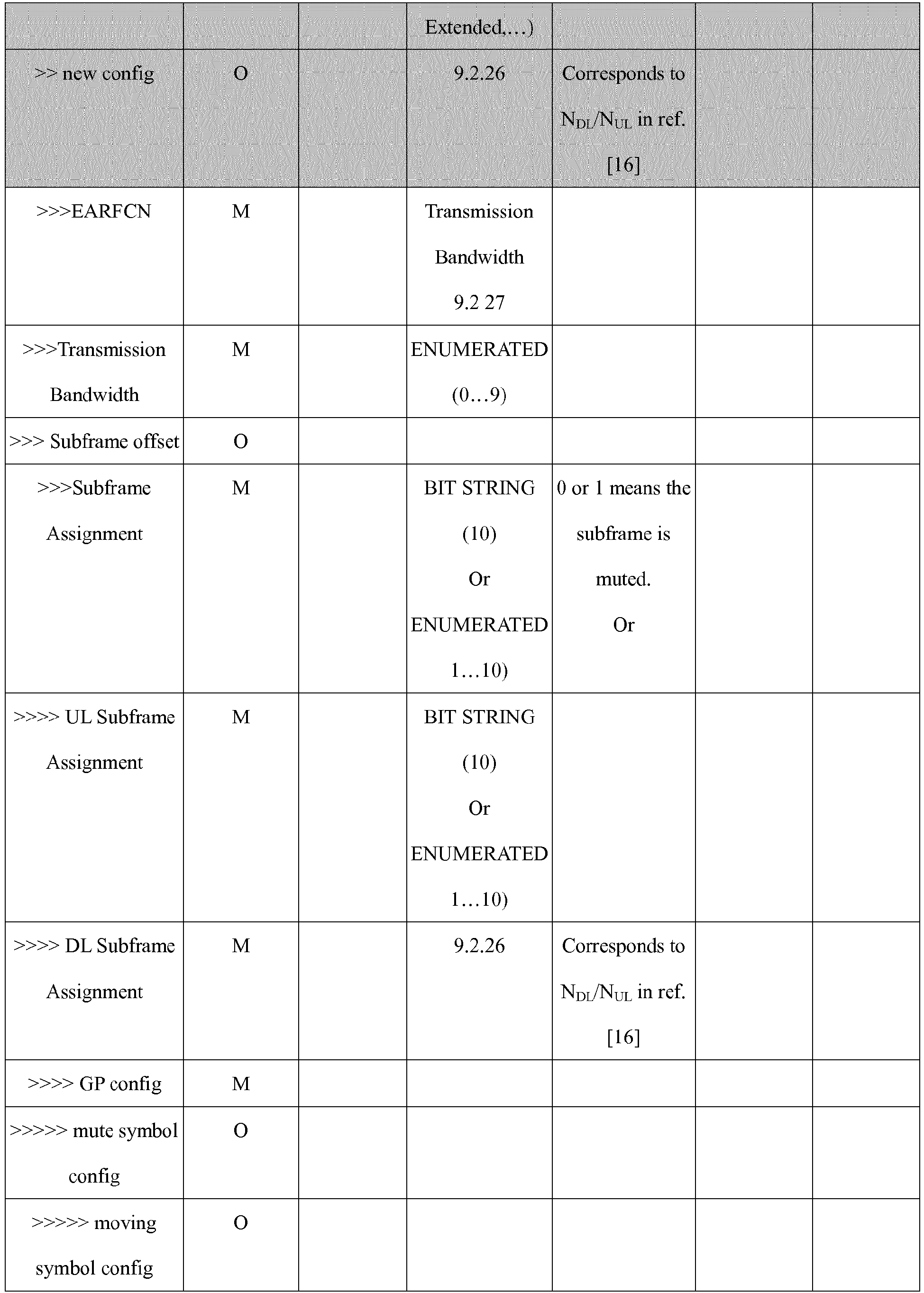

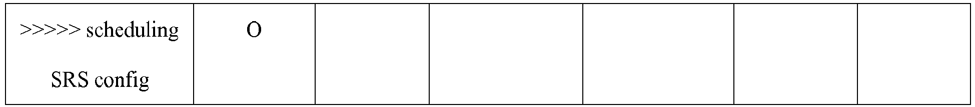

It can be understood that if the cell configurations indicated by the macro base station M1 are all accepted by the Pico base station P1, the corresponding gray IEs may be omitted.

In addition, in display activation indication mode, the macro base station M1 may not specify specific configurations, but only indicates part of cell configurations, and the Pico base station P1 determines how to adjust the configuration of a cell. The specific configurations are as shown in Table 12.

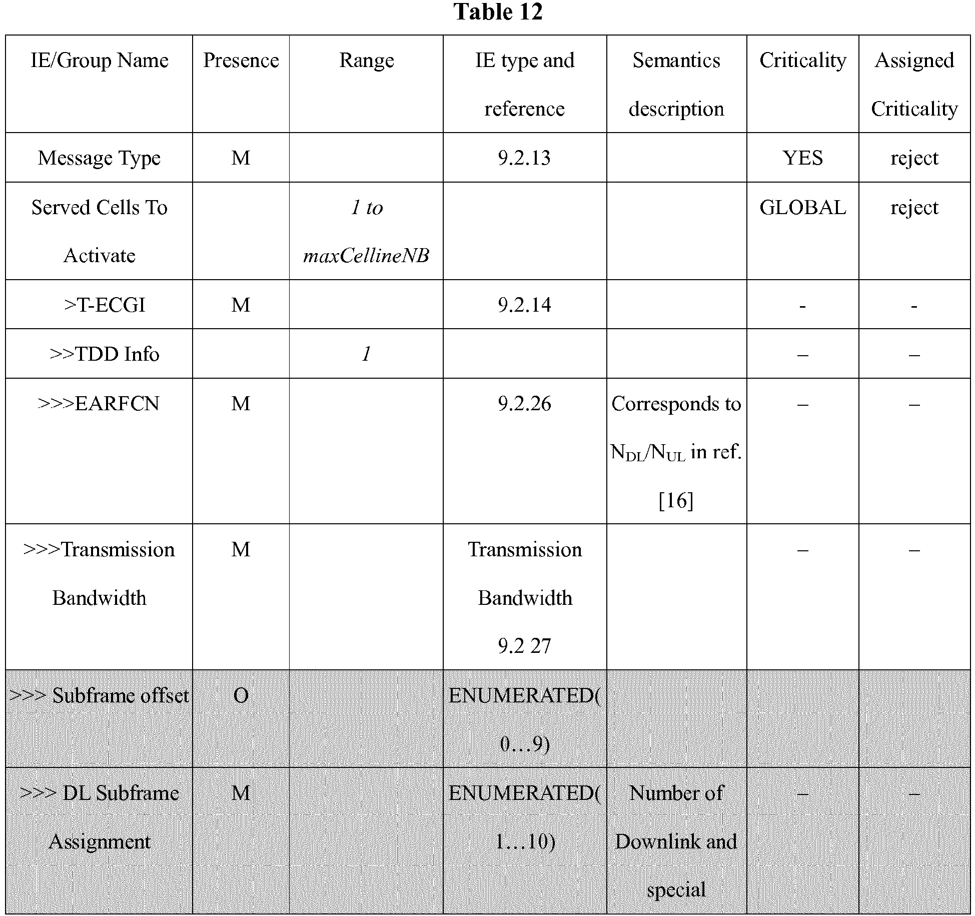

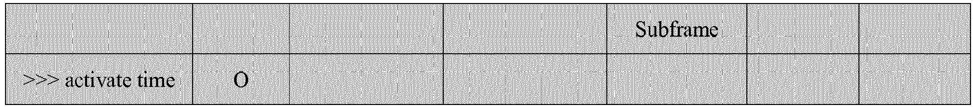

In such a configuration, the Pico base station P1 needs to feedback specific cell configuration information in the corresponding information for adjusting cell activation, and then provides the configuration information for the macro base station M1 to configure non-scheduling uplink subframes in the macro cell Cₘ₁ according to the cell configuration fed back by the Pico base station P1.

208. The Pico base station P1 sends a message ms12 (for example, an eNB configuration update response message, or a cell activation response message, or another message) to the macro base station M1.

After deploying the new Pico cell C_{P2}, the Pico base station may notify configuration of the new Pico cell C_{P2} to the macro base station M1 by using the eNB configuration update response message or the cell activation response message (message ms12).

In practice, the Pico base station P1 may carry, in the eNB configuration update response message or the cell activation response message (message ms12), one or more types of the following information: frequency information of the radio access link resources in the Pico cell C_{P2}, bandwidth information of the radio access link resources in the Pico cell C_{P2}, timeslot position information of the radio access link resources in the Pico cell C_{P2}, and subframe offset information of the radio access link resources in the Pico cell C_{P2} that are adjusted by the Pico base station P1.Further, the message may further carry one or more of types of the following information: usage information of the adjusted resources of the radio link, activation time information of adjustment of the resources of the radio link, and configuration information of the guard period between uplink and downlink.

209. The Pico base station P1 notifies the configuration change in the cell to the UE served by the Pico base station P1.

In an application scenario, the Pico base station P1 may send serving cell configuration update information to part of or all user terminals (for example, the cell configuration change is notified to only UEs in latest versions such as R10 or the cell configuration change is notified to all UEs) served by the Pico base station P1 by using a system message or dedicated signaling, where the serving cell configuration update information includes one or more types of the following information: uplink and/or downlink frequency information of the adjusted resources in the Pico cell C_{P2}, uplink and/or downlink bandwidth information of the adjusted resources in the Pico cell C_{P2}, activation time information of adjustment of the resources in the Pico cell C_{P2}, and configuration information of the guard period between uplink and downlink.

In addition, the Pico base station P1 may also send neighbor cell configuration update information to part of or all user terminals served by the Pico base station P1 by using a system message or dedicated signaling, where the neighbor cell configuration update information includes one or more types of the following information: frequency information of the adjusted resources in the neighbor cell Cₘ₁, bandwidth information of the adjusted resources in the neighbor cell Cₘ₁, timeslot position information of the adjusted resources in the neighbor cell Cₘ₁, subframe offset information of the adjusted resources in the neighbor cell Cₘ₁ that are adjusted by the macro base station M2, and configuration information of the guard period between uplink and downlink; and activation time information of adjustment of the resources in the neighbor cell Cₘ₁. The UE may perform HARQ feedback, measurement control and neighbor cell detection accordingly. The dedicated signaling may also include an RRC connection reconfigure message or an RRC connection establish or re-establish message.

210. The macro base station M2 sends a message ms12 (for example, an eNB configuration update response message, or a cell activation response message, or an eNB configuration update message, or another message) to the macro base station M1.

The macro base station M2 may also notify the configuration change in a neighbor cell of the cell C_{P2} to the UE served by the macro base station M2.

In addition, the macro base station M2 may also send neighbor cell configuration update information to part of or all user terminals served by the macro base station M2 by using a system message or dedicated signaling, where the neighbor cell configuration update information includes one or more types of the following information: frequency information of the resources in the neighbor cell, bandwidth information of the resources in the neighbor cell, uplink and/or downlink timeslot position information of the resources in the neighbor cell, timeslots offset information of the resources in the neighbor cell that are adjusted by the Pico base station P1, and configuration information of the guard period between uplink and downlink; and activation time information of adjustment of the resources in the neighbor cell.

211. The Pico base station P1, the macro base station M1, and the macro base station M2 interact with each other for usage status of UL/DL PRBs.

The Pico base station P1 may interact with the macro base station M1 and the macro base station M2 for the usage status of the UL/DL PRBs in the cell C_{P2} under triggering of a trigger event C1 and/or a trigger event C2.

212. The macro base station M1 prepares to adjust configuration of UL PRBs in the macro cell Cₘ₁.

In an application scenario, if determining, according to the monitored usage status of uplink PRBs in the cell Cₘ₁, that redundant uplink PRBs exist in the cell Cₘ₁, the macro base station M1 reduces the number of configured uplink PRBs in the cell Cₘ₁; if determining, according to the monitored usage status of uplink PRBs in the cell Cₘ₁, that uplink physical resource blocks in the cell Cₘ₁ are insufficient, the macro base station M1 increases the number of configured uplink PRBs in the cell Cₘ₁. In this case, the macro base station M1 may firstly instruct the Pico base station P1 to reduce the number of configured downlink PRBs in the Pico cell Cₚ₂, and increase the number of configured uplink PRBs in the cell Cₘ₁ after the Pico base station P1 correspondingly reduces the number of configured downlink PRBs in the Pico cell Cₚ₂.

213. The macro base station M1 sends a message ms3 (for example, an eNB configuration update message, or a cell activation message, or another message) to the Pico base station P1.

Correspondingly, the macro base station M1 may also inform the Pico base station P1 of information of resource adjustment in the macro cell Cₘ₁ by using the eNB configuration update message or the cell activation message (message ms3).

In practice, the eNB configuration update message or the cell activation message (message ms3) may carry indication information indicating an adjustment quantity of physical resource blocks PRBs in the macro cell Cₘ₁ that are adjusted by the macro base station M1, where the indication information may include one or more types of the following information: frequency information of the resources in the macro cell Cₘ₁ that are adjusted by the macro base station M1, bandwidth information of the resources in the macro cell Cₘ₁ that are adjusted by the macro base station M1, the number of timeslots of the resources in the macro cell Cₘ₁ that are adjusted by the macro base station M1, timeslot position information of the resources in the macro cell Cₘ₁ that are adjusted by the macro base station M1, configuration information of the guard period between uplink and downlink, subframe offset information of the resources in the macro cell Cₘ₁ that are adjusted by the macro base station M1.

Further, the eNB configuration update notification message or the cell activation message (message ms3) may further carry: usage information (for example, indicating that the resources are used to configure an access link in a Pico cell, or a radio backhaul link, or energy saving configuration) of the resources in the macro cell Cₘ₁ that are adjusted by the macro base station M1, and/or activation time information of adjustment of the resources in the macro cell Cₘ₁.

214. The macro base station M1 sends a message ms4 (for example, an eNB configuration update message, or a cell activation message, or another message) to the macro base station M2.

Correspondingly, the macro base station M1 may also, for example, notify information of resource adjustment in the macro cell Cₘ₁ to the macro base station M2 by using the eNB configuration update message or the cell activation message (message ms4).

In practice, the eNB configuration update message or the cell activation message (message ms4) may carry indication information indicating an adjustment quantity of physical resource blocks PRBs in the macro cell Cₘ₁ that are adjusted by the macro base station M1, where the indication information may include one or more types of the following information: frequency information of the resources in the macro cell Cₘ₁ that are adjusted by the macro base station M1, bandwidth information of the resources in the macro cell Cₘ₁ that are adjusted by the macro base station M1, the number of timeslots of the resources in the macro cell Cₘ₁ that are adjusted by the macro base station M1, timeslot position information of the resources in the macro cell Cₘ₁ that are adjusted by the macro base station M1, configuration information of the guard period between uplink and downlink, subframe offset information of the resources in the macro cell Cₘ₁ that are adjusted by the macro base station M1.

Further, the eNB configuration update message or the cell activation message (message ms4) may further carry: usage information (for example, indicating that the resources are used to configure an access link in a Pico cell, or a radio backhaul link) of the resources in the macro cell Cₘ₁ that are adjusted by the macro base station M1, and/or activation time information of adjustment of the resources in the macro cell Cₘ₁.

The macro base station M2 may changes configuration of uplink PRBs in the neighbor cell of the cell C_{P2} served by the macro base station M2 according to the eNB configuration update message or the cell activation message (message ms4), to prevent interference.

215. The Pico base station P1 adjust configuration of the Pico cell C_{P2}.

The Pico base station P1 may determine, according to information of the adjusted resource configuration in the macro cell Cₘ₁ and interference caused by a neighbor cell to the macro cell Cₘ₁, how to adjust resource configuration in the Pico cell C_{P2}.

In an application scenario, if the macro base station M1 reduces the number of configured uplink PRBs in the cell Cₘ₁, the Pico base station P1 may correspondingly increase the number of configured downlink PRBs in the Pico cell C_{P2}, or may not change the number of configured downlink PRBs in the Pico cell C_{P2}; if the macro base station M1 increases the number of configured uplink PRBs in cell Cₘ₁, the Pico base station P1 may correspondingly reduce the number of configured downlink PRBs in the Pico cell C_{P2}.

216. The Pico base station P1 sends a message ms32 (for example, an eNB configuration update response message, or a cell activation response message, or an eNB configuration update message, or another message) to the macro base station M1, and notifies the updated configuration of the cell C_{P2} to the macro base station M1.

217. The macro base station M2 sends a message ms42 (for example, an eNB configuration update response message, or a cell activation response message, or an eNB configuration update message, or another message) to the macro base station M1, and notifies the updated configuration of the neighbor cell to the macro base station M1.

218. The Pico base station P1 notifies the configuration change in the cell C_{P2} to the UE served by the Pico base station P1.

The macro base station M2 may also notify the cell configuration change to the UE camping in a neighbor cell of the cell C_{P2}.

219. The macro base station M1 changes the configuration of the cell Cₘ₁.

220. The macro base station M1 notifies the configuration change in the cell Cₘ₁ to the UE served by the macro base station M1.

As seen from the above, in the solution provided in this embodiment, the macro base station with redundant uplink resources in a served cell adjusts resource configuration in the cell and provides part of or all the redundant resources in the cell for a Pico base station neighboring to the macro base station to configure a radio access link and/or a radio backhaul link for the cell. The Pico base station correspondingly adjusts, according to the adjustment of the resource configuration in the cell performed by the macro base station, resource configuration of the radio access link of the cell. This mechanism helps improve usage efficiency of resources and enhance system performance and quality of service.

### Embodiment 3

For a better understanding, the following describes the technical solution provided in this embodiment by using the process that a macro base station provides its redundant UL/DL spectrum resource for a Pico base station to apply the resources to a radio access link and a radio backhaul link thereof.

Referring to FIG. 5, for example, a macro base station M1 and a macro base station M2 are neighbor base stations of a Pico base station P1, another embodiment illustrating a method for adjusting configuration of a spectrum resource according to the present invention may specifically include:
501. The macro base station M1 and the Pico base station P1 monitor usage rate of PRBs in their served cells.
502. The macro base station M1 and the Pico base station P1 interact with each other about usage status of the PRBs in their served cells.

Steps 501-502 are similar to steps 201-202 in terms of implementation mode.

503. The macro base station M1 adjusts configuration of PRBs in the cell Cₘ₁ to provide part of or all redundant PRBs in the macro cell Cₘ₁ for a Pico base station to form the radio access link and the radio backhaul link of the cell.

In an application scenario, the macro base station M1 decides whether to reduce the number of configured PRBs in the cell Cₘ₁. The decision may be performed with reference to one or more of the following three reference conditions:
Reference condition 1: Redundant uplink PRBs exist in the cell Cₘ₁ served by the macro base station M1.
Reference condition 2: Downlink PRBs in a cell (including the cell C_{P1}) neighboring to the cell Cₘ₁ and served by the Pico base station P1 are insufficient.
Reference condition 3: Neighbor base stations such as the macro base station M1 and the Pico base station P1 suffer from strong cell interference, and in this case, it is likely that the Pico base station P1 adopts the RE technology in the cell C_{P1}.(Because offset configuration for cell reselection and offset configuration for measurement report for neighbor cells (including the cell C_{P1}) are provided in the cell Cₘ₁, the macro base station M1 may accordingly acquire whether the neighbor cell C_{P1} of the cell Cₘ₁ adopts RE configuration.)

Reference condition 1 is mandatory, and reference conditions 2 and 3 are optional.

The macro base station M1 may acquire usage status of PRBs in the cell Cₘ₁ and the cell Cₚ₁ by using step 201 and step 202. The macro base station M1 may decide whether to adjust configuration of the PRBs in the cell Cₘ₁ according to reference condition 1, or reference conditions 1 and 2, or reference conditions 1 and 3, or reference conditions 1, 2 and 3. When the reference condition is satisfied, the macro base station M1 may determine to reduce the number of configured downlink PRBs in the cell Cₘ₁ to provide part of or all redundant PRBs in the cell Cₘ₁ for a Pico base station to form an access link of the cell.

For ease of understanding, the following gives further description using an assumption that the macro cell Cₘ₁ and the Pico cell Cₚ₁ are both FDD cells, and cell spectrum resource deployment in the initial network state may be illustrated in FIG 4-a or FIG. 4-b.

In the initial network state illustrated in FIG. 4-a and FIG. 4-b, deployment uplink and downlink frequency bands in the macro cell Cₘ₁ and the Pico cell Cₚ₁ may be the same, with 20M bandwidth at both uplink and downlink frequency bands, that is, spectrum configuration in the block marked by dashed lines exists in the Pico cell. Alternatively, the deployment may be different, for example, spectrum configuration in the block marked by dashed lines does not exist in the Pico cell.

The macro base station M1 may adjust positions (including quantity) of the PRBs in the macro cell Cₘ₁ in a plurality of manners according to redundancy of the uplink resources in the macro cell Cₘ₁ to reduce the number of configured uplink PRBs in the macro cell Cₘ₁ and provide part of or all redundant uplink PRBs in the macro cell Cₘ₁ for the Pico base station P1 to apply the PRBs to the cell access link and radio backhaul link thereof. The Pico base station P1 may correspondingly deploy a new cell (may be referred to as a cell Cₚ₂) in TDD mode or non-TDD-compatible mode and the radio backhaul link according to position adjustment of the PRBs in the macro cell Cₘ₁ performed by the macro base station M1. It can be understood that the cell Cₚ₂ newly deployed by the Pico base station P1 and the macro cell Cₘ₁ are neighbor cells.

The following describes changes of network deployment status by using a heterogeneous network as an example. The case of a homogeneous network is similar to that of the heterogeneous network.

### Adjustment scenario 3:

The macro base station M1 may reduce the number of subframes corresponding to all FDD uplink frequency bands in the macro cell Cₘ₁ to provide the redundant subframes for the Pico base station P1 to configure downlink timeslots for a neighbor cell Cₚ₂. For example, network cell deployment status changes from the scenario illustrated in FIG. 4-a to the scenario illustrated in FIG. 6-a.

The macro base station M1 adjusts positions of the FDD uplink subframes in the macro cell Cₘ₁, so that the Pico base station P1 can deploy a new radio backhaul link, where the spectrum resources of the radio backhaul absolutely come from the FDD UL frequency bands. On the macro base station M1 side, the uplink and downlink links of the radio backhaul and the UL feedback link of the FDD system share the FDD uplink frequency bands in time-division mode. On the pico base station P1 side, the uplink and downlink links of the radio backhaul and the UL feedback link of the FDD system share the FDD uplink frequency bands in time-division mode.

In the scenario illustrated in FIG. 6-a:

### Access link in a macro cell:

DL (from a macro cell to a UE): subframes 0-9 in the FDD DL frequency band in the macro cell are used;

UL (from a UE to a macro cell): parts of subframes in the FDD UL frequency band are used, including subframes 2-4 and 7-9. At the positions of uplink subframes 2, 4, 7 and 9, the uplink of the radio backhaul link and the uplink access link of the macro cell Cₘ₂ multiplex the same uplink timeslots. The multiplexing may be based on frequency division, time division or resource block division.

### Access link in a pico cell:

DL (from a pico cell to a UE): subframes 0-9 in the FDD DL frequency band in the pico cell are used;

UL (from a UE to a pico cell): parts of subframes in the FDD UL frequency band in the pico cell are used, including subframes 3 and 8.

### Radio backhaul link between the macro base station M1 and the pico base station P1:

DL (from a macro cell to a pico cell): part of subframes in the FDD UL frequency band are used, including subframes 0-1 and subframes 5-6 in the FDD UL frequency band in the macro cell, and subframes 0-1 and subframes 5-6 in the FDD UL frequency band in the pico cell;

UL (from a pico cell to a macro cell): part of subframes in the FDD UL frequency band are used, including: subframes 2 and 4 and subframes 7 and 9 in the FDD UL frequency bands in the macro cell and the pico cell.

Assuredly, other modes for configuring the TDD cell and radio backhaul may also be used. The configuration modes are similar and thus are not detailed here again.

### Adjustment scenario 4:

The macro base station M1 may adjust the number of subframes in the FDD uplink and downlink frequency bands in the macro cell Cₘ₁, to provide the redundant subframes for the Pico base station P1 to configure the radio backhaul link and uplink and downlink timeslots in the neighbor cell Cₚ₂.

For example, network cell deployment status changes from the scenario illustrated in FIG. 4-a to the scenario illustrated in FIG. 6-b.

In the adjustment scheme, the spectrum resources of the radio backhaul link come from the FDD DL and UL frequency bands. On the macro base station side and the pico base station side, the downlink backhaul link and the DL access link of the FDD system share the FDD downlink frequency band, and meanwhile the uplink backhaul link and the UL access link of the FDD system share the FDD uplink frequency band. In the scenario illustrated in FIG. 6-b:

### Access link in a macro cell:

DL (from a macro cell to a UE): part of subframes in the FDD DL frequency band in the macro cell are used, including subframes 0-1, and subframes 5-6; with regard to subframes 2-4 and subframes 7-9, the downlink access link in the macro cell and the downlink backhaul link may be multiplexed in time-domain, frequency-domain, or resource block mode;

UL (from a UE to a macro cell): part of subframes in the FDD UL frequency band in the macro cell are used, including subframes 2-4, and subframes 7-9; with regard to subframes 0-1 and subframes 5-6, the uplink access link in the macro cell and the uplink backhaul link may be multiplexed in time-domain, frequency-domain, or resource block mode.

### Access link in the Pico cell, where the Pico cell has two access links:

### FDD access link:

DL (from a pico cell to a UE): part of subframes in the FDD DL frequency band in the Pico cell are used, including subframes 0-1, and subframes 5-6;

UL (from a UE to a pico cell): part of subframes in the FDD UL frequency band in the Pico cell are used, including subframes 2-4, and subframes 7-9.

### TDD access link:

DL (from a pico cell to a UE): part of subframes in the FDD UL frequency band in the Pico cell are used, including subframes 0-1, and subframes 5-6;

UL (from a UE to a pico cell): part of subframes in the FDD UL frequency band in the Pico cell are used, including subframes 2-4, and subframes 7-9;

### Radio backhaul link:

DL (from a macro cell to a pico cell): part of subframes in the FDD DL frequency band are used, including subframes 2-4 and subframes 7-9 in the FDD DL frequency band in the macro cell, and subframes 2-4 and subframes 7-9 in the FDD DL frequency band in the pico cell;

UL (from a pico cell to a macro cell): part of subframes in the FDD UL frequency band are used, including subframes 0-1 and subframes 5-6 in the FDD UL frequency band in the macro cell, and subframes 0-1 and subframes 5-6 in the FDD UL frequency band in the pico cell. In the FDD UL frequency band in the pico cell, the downlink access link (from a Pico cell to a UE) and the uplink radio backhaul link (from a Pico cell to a Macro cell) in the Pico cell multiplex the same subframe timeslots (subframes 0-1 and subframes 5-6). The multiplexing may be based on frequency division, time division or resource block division.

It can be seen that the access link and radio backhaul link adjusted in FIG. 6-b satisfy a TDD-compatible configuration relationship between uplink and downlink timeslots.

The access link adjusted in FIG. 6-c satisfies a non-TDD-compatible configuration relationship, and may be considered as a flexible configuration relationship. In the scenario illustrated in FIG. 6-c:

### Access link in a macro cell:

DL (from a macro cell to a UE): part of subframes in the FDD DL frequency band in the macro cell are used, including subframes 0-3; with regard to subframes 4-9, the downlink access link in the macro cell and the downlink backhaul link may be multiplexed in time-domain, frequency-domain, or resource block mode;

UL (from a UE to a macro cell): part of subframes in the FDD UL frequency band in the macro cell are used, including subframes 4-9; with regard to subframes 4-9, the uplink access link in the macro cell and the uplink backhaul link may be multiplexed in time-domain, frequency-domain, or resource block mode;

### Access link in the Pico cell, where the Pico station has two access links:

### FDD access link:

DL (from a pico cell to a UE): parts of subframes in the FDD DL frequency band in the Pico cell are used, including subframes 0-3.

UL (from a UE to a pico cell): parts of subframes in the FDD UL frequency band in the Pico cell are used, including subframes 4-9.

### Access link 2:

DL (from a pico cell to a UE): parts of subframes in the FDD UL frequency band in the Pico cell are used, including subframes 0-3;

UL (from a UE to a pico cell): parts of subframes in the FDD UL frequency band in the Pico cell are used, including subframes 4-9.

### Radio backhaul link:

DL (from a macro cell to a pico cell): part of subframes in the FDD DL frequency band are used, including subframes 4-9 in the FDD DL frequency band in the macro cell, and subframes 4-9 in the FDD DL frequency band in the pico cell;

UL (from a pico cell to a macro cell): part of subframes in the FDD UL frequency band are used, including subframes 0-3 in the FDD UL frequency band in the macro cell, and subframes 0-3 in the FDD UL frequency band in the pico cell. In the FDD UL frequency band in the pico cell, the downlink access link (from a Pico cell to a UE) and the uplink radio backhaul link (from a Pico cell to a Macro cell) in the Pico cell multiplex the same subframe timeslots (subframes 0-3). The multiplexing may be based on frequency division, time division or resource block division.

Assuredly, other modes for configuring the cell radio link and radio backhaul may also be used. The configuration modes are similar and thus are not detailed here again.

In an application scenario, when the macro base station M1 determines to provide the FDD uplink PRBs in the macro cell Cₘ₁ for configuring a radio backhaul link and downlink timeslots in the Pico cell C_{P2}, the macro base station M1 may determine, according to interference conditions and the number of redundant PRBs, an adjustment mode to be used, and adjust the uplink PRBs in the macro cell Cₘ₁.

504. The macro base station M1 sends a message ms51 (for example, an eNB configuration update message, or a cell activation message ms51, or another message) to the Pico base station P1.

The macro base station M1 may, for example, notify information of resource adjustment in the macro cell Cₘ₁ to the Pico base station P1 by using the eNB configuration update message or the cell activation message (message ms51) so that the Pico base station P1 configures a new Pico cell Cₚ₂ and a backhaul link according to the information of resource adjustment in the macro cell Cₘ₁.

In practice, the eNB configuration update message or the cell activation message (message ms51) may carry indication information indicating an adjustment quantity of physical resource blocks PRBs in the cell Cₘ₂ that are adjusted by the macro base station M1, where the indication information may include one or more types of the following information: frequency information of the resources in the macro cell Cₘ₁ that are adjusted by the macro base station M1, bandwidth information of the resources in the macro cell Cₘ₁ that are adjusted by the macro base station M1, the number of timeslots of the resources in the macro cell Cₘ₁ that are adjusted by the macro base station M1, timeslot position information of the resources in the macro cell Cₘ₁ that are adjusted by the macro base station M1, configuration information of the guard period between uplink and downlink, subframe offset information of the resources in the macro cell Cₘ₁ that are adjusted by the macro base station M1.

Further, the eNB configuration update message or the cell activation message (message ms51) may further carry: usage information (for example, indicating that the resources are used to configure a radio backhaul link, and an access link in a Pico cell or energy saving configuration) of the resources in the macro cell Cₘ₁ that are adjusted by the macro base station M1, and/or activation time information of adjustment of the resources in the macro cell Cₘ₁. Assuredly, the eNB configuration update message or the cell activation message (message ms51) may not carry one or more pieces of the above information, and corresponding configuration may be acknowledged between base stations in a default manner. For example, if the indication information does not include frequency information or bandwidth information of the resources in the macro cell Cₘ₁ that are adjusted by the macro base station M1, the Pico base station P1 may consider by default the frequencies of the resources in the macro cell Cₘ₁ that are adjusted by the macro base station M1 as start frequencies corresponding to the downlink frequency bands, and the bandwidths of the resources in the macro cell Cₘ₁ that are adjusted by macro base station M1 are bandwidths corresponding to downlink frequency bands in the cell, and the rest may be deduced likewise. Alternatively, one or more fixed resource adjustment schemes may also be protocol-defined between base stations, resource adjustment scheme information may be directly interacted between base stations, or only index information corresponding to the resource adjustment scheme is interacted between access network devices. In this way, information of resource adjustment is notified to a peer. Assuredly, if only one resource adjustment scheme is available, the peer only needs to be notified as whether to adjust resources.

505. The macro base station M1 sends a message ms52 (for example, an eNB configuration update message, or a cell activation message ms52, or another message) to the macro base station M2.

Correspondingly, the macro base station M1 may also notify information of resource adjustment in the macro cell Cₘ₁ to the macro base station M2 by using the eNB configuration update message or the cell activation message (message ms52).

In practice, the eNB configuration update message or the cell activation message (message ms52) may carry indication information indicating an adjustment quantity of physical resource blocks PRBs in the macro cell Cₘ₁ that are adjusted by the macro base station M1, where the indication information may include one or more types of the following information: frequency information of the resources in the macro cell Cₘ₁ that are adjusted by the macro base station M1, bandwidth information of the resources in the macro cell Cₘ₁ that are adjusted by the macro base station M1, the number of timeslots of the resources in the macro cell Cₘ₁ that are adjusted by the macro base station M1, timeslot position information of the resources in the macro cell Cₘ₁ that are adjusted by the macro base station M1, configuration information of the guard period between uplink and downlink, subframe offset information of the resources in the macro cell Cₘ₁ that are adjusted by the macro base station M1.

Further, the eNB configuration update message or the cell activation message (message ms52) may further carry: usage information (for example, indicating that the resources are used to configure an access link in a Pico cell, or a radio backhaul link, or energy saving configuration) of the resources in the macro cell Cₘ₁ that are adjusted by the macro base station M1, and/or activation time information of adjustment of the resources in the macro cell Cₘ₁.

Assuredly, the eNB configuration update message or the cell activation message (message ms52) may not carry one or more pieces of the above information, and corresponding configuration may be acknowledged between base stations in a default manner. For example, if the indication information does not include frequency information or bandwidth information of the resources in the macro cell Cₘ₁ that are adjusted by the macro base station M1, the macro base station M2 may consider by default the frequencies of the resources in the macro cell Cₘ₁ that are adjusted by the macro base station M1 as start frequencies corresponding to the downlink frequency bands in a cell, and the bandwidths of the resources in the macro cell Cₘ₁ that are adjusted by macro base station M1 are bandwidths corresponding to downlink frequency bands in the cell, and the rest may be deduced likewise. Alternatively, one or more fixed resource adjustment schemes may also be protocol-defined between base stations, resource adjustment scheme information may be directly interacted between base stations, or only index information corresponding to the resource adjustment scheme is interacted between base stations. In this way, information of resource adjustment is notified to a peer. Assuredly, if only one resource adjustment scheme is available, the peer only needs to be notified as whether to adjust resources.

The macro base station M2 may changes configuration of uplink PRBs in the neighbor cell of the cell C_{P2} served by the macro base station M2 by using the eNB configuration update message or the cell activation message (message ms52), to prevent interference caused to the cell.

It can be understood that information interaction may be implemented between the macro base station M1, the macro base station M2 and the Pico base station P1 by using a direct interface between the base stations, for example, an X2 interface, an Iur interface, an Iub interface or an air interface, or by using an indirect interface between the base stations, for example, an S1 interface or an Iu interface.

506. The macro base station M1 notifies the configuration change in the cell Cₘ₁ to the UE served by the macro base station M1.

In an application scenario, when the macro base station M1 changes or intends to change configuration of the uplink resources in the cell Cₘ₁, if part of its served UEs (for example, UE in version R10) support the new configuration mode of the UL subframes in the cell Cₘ₁, and when a special HARQ feedback design is made for the new configuration of the uplink subframes in the cell Cₘ₁, the macro base station M1 may notify the changed configuration of the UL subframes (timeslots) to the UE in a latest version at the air interface in broadcast mode or unicast mode. However, such notification cannot be implemented for the UE in an earlier version.

The macro base station M1 may send serving cell configuration update information to part of or all UEs served by the macro base station M1, where the serving cell configuration update information includes one or more types of the following information:
uplink and/or downlink frequency information of the adjusted resources in the cell Cₘ₁, uplink and/or downlink bandwidth information of the adjusted resources in the cell Cₘ₁, uplink and/or downlink position information of the mute (mute) timeslots of the adjusted resources in the cell Cₘ₁, activation time of adjustment of the resources in the cell Cₘ₁.

In a scenario where the Pico base station may be configured with non-TDD cells, information may be notified at an air interface by the macro base station M1 to its served UEs in a latest version in broadcast mode (by using a system broadcast message) and in unicast mode (by using a dedicated signaling message). If the macro base station M1 notifies information to the UE by using dedicated signaling, information of the uplink and downlink mute subframes in cell Cₘ₁ may be carried in a plurality of types of downlink signalings to be transferred, for example, a paging message, a connection establish message, a connection reconfigure message, a connection re-establish message, and a downlink message transmission message.

507. The Pico base station P1 configures a new Pico cell C_{P2} and a radio backhaul link.

The Pico base station P1 may determine, according to the resources provided by the macro cell Cₘ₁ and interference caused by a neighbor cell to the macro cell Cₘ₁, to use the resources provided by the macro cell Cₘ₁ to deploy the Pico cell C_{P2} and the radio backhaul link. Deployment of the new Pico cell C_{P2} may be considered as adjustment of the resources of the radio access link in the cell from none to availability, or change from one configuration to another. Deployment of the new radio backhaul link may be considered as adjustment of the resources of the radio access link from none to availability, or change from one configuration to another.

The uplink and downlink subframe (timeslot) assignment ratio in the newly deployed Pico cell C_{P2} is as follows:
The Pico base station P1 may match the number of subframes of the uplink resources provided by the macro cell Cₘ₁ with the TDD cell configuration mode, to obtain an uplink and downlink subframe assignment ratio in the Pico cell C_{P2} satisfying the TDD cell configuration mode. Alternatively, the Pico base station P1 may also determine the uplink and downlink subframe (timeslot) assignment ratio in the Pico cell C_{P2} according to HARQ timeslots and processing requirements of uplink and downlink scheduling.

The following mainly uses the case of configuring the Pico cell C_{P2} to a TDD cell (that is, newly deploying a TDD cell by the Pico base station P1) as an example for description. In addition, uplink and downlink configuration in the case of configuring the Pico cell C_{P2} to a non-TDD cell (that is, flexible uplink and downlink configuration) is similar.

In the case of flexible uplink and downlink configuration (that is, configuring a non-TDD cell), positions of the uplink and downlink subframes in the Pico cell C_{P2} may be determined by a valid HARQ time sequence.

Previously, hardware processing capabilities (including transmission and reception capabilities) or incomplete cell configuration information may also be interacted between base stations. The information indicating that the base station may be added with a cell but does not have the cell configuration capability for the spectrum resource may also be notified to the neighbor base station. The interaction information may be sent during establishment of an interface between base stations, or may be interacted in subsequent interface signalings.

For example, for support of downlink sending in the FDD UL frequency band, a new transmission channel needs to be added on the base station. In the scenario illustrated in FIG. 6-b, a receiving channel also needs to be configured. If the macro base station M1 (a base station providing resources) acquires that the Pico base station P1 has the capability of newly adding a transmission channel, the macro base station M1 may send a message to the Pico base station P1 in a well-targeted manner and provide FDD UL frequency band resources for the Pico base station P1.

Part of configuration information of the cell C_{P2} (although before configuration of uplink and downlink resources, the cell C_{P2} is not running and in the deactivated state) may be configured on the Pico base station P1, and the Pico base station P1 may interact with neighbor base stations (including the macro base station M1 and the macro base station M2). The part of configuration information of the cell C_{P2} interacted between the base stations may include one or more types of the following information:
physical layer cell identifier, upper-layer cell identifier, tracing area code, PLMN identifier of the cell C_{P2};
information indicating whether the working mode of the cell C_{P2} is TDD mode or FDD mode (optional);
state of the cell C_{P2} (deactivate state in the case of incomplete configuration).

In addition, if the hardware processing capabilities of the base stations are not interaction between the base stations, the base station capable of providing resources sends FDD UL resource providing information to part of or all neighbor base stations, and the neighbor base station having the corresponding hardware processing capability is capable of making a response.

508. The Pico base station P1 sends a message ms512 (for example, an eNB configuration update response message, or a cell activation response message, or an eNB configuration update message, or another message) to the macro base station M1.

After deploying the new Pico cell C_{P2}, the Pico base station may notify configuration of the new Pico cell C_{P2} to the macro base station M1 by using the eNB configuration update response message, or the cell activation response message, or the eNB configuration update message (message ms512).

In practice, the Pico base station P1 may carry, in the eNB configuration update response message or the cell activation response message or the eNB configuration update message (message ms512), one or more types of the following information: frequency information of the resources of the radio backhaul link and the radio access link of the Pico cell C_{P2}, bandwidth information of the resources of the radio backhaul link and the radio access link of the Pico cell C_{P2}, timeslot position information of the resources of the radio backhaul link and the radio access link of the Pico cell C_{P2}, and subframe offset information of the resources of the radio backhaul link and the radio access link of the Pico cell C_{P2} that are adjusted by the Pico base station P1; and configuration information of the guard period between uplink and downlink. Further, the message also carries usage information of the adjusted resources of the radio link, and/or activation time information of adjustment of the resources of the radio link and energy-saving configuration.

509. The Pico base station P1 notifies the configuration change in the cell to the UE served by the Pico base station P1.

In an application scenario, the Pico base station P1 may send serving cell configuration update information to part of or all user terminals (for example, the cell configuration change is notified to only UEs in latest versions such as R10 or the cell configuration change is notified to all UEs) served by the macro base station M1 by using a system message or dedicated signaling, where the serving cell configuration update information may include one or more types of the following information: uplink and/or downlink frequency information of the adjusted resources of the radio backhaul link and the Pico cell C_{P2}, uplink and/or downlink bandwidth information of the adjusted resources of the radio backhaul link and the Pico cell C_{P2}, activation time information of adjustment of the resources of the radio backhaul link and the Pico cell C_{P2}, and configuration information of the guard period between uplink and downlink.

In addition, the Pico base station P1 may also send neighbor cell configuration update information to part of or all user terminals served by the Pico base station P1 by using a system message or dedicated signaling, where the neighbor cell configuration update information includes one or more types of the following information: frequency information of the resources in the neighbor cell Cₘ₁, bandwidth information of the resources in the neighbor cell Cₘ₁, timeslot position information of the resources in the neighbor cell Cₘ₁, subframe offset information of the resources in the neighbor cell Cₘ₁ that are adjusted by the macro base station M2; activation time information of adjustment of the resources in the neighbor cell Cₘ₁, and configuration information of the guard period between uplink and downlink.

510. The macro base station M2 sends a message ms522 (for example, an eNB configuration update response message, or a cell activation response message ms52, or an eNB configuration update message, or another message) to the macro base station M1.

The macro base station M2 may also notify the configuration change in a neighbor cell of the cell C_{P2} to the UE served by the macro base station M2.

In an application scenario, the macro base station M1 may send serving cell configuration update information to part of or all user terminals (for example, the cell configuration change is notified to only UEs in latest versions such as R10 or the cell configuration change is notified to all UEs) served by the macro base station M1 by using a system message or dedicated signaling, where the serving cell configuration update information includes one or more types of the following information: uplink and/or downlink frequency information of the adjusted resources of the radio backhaul link, uplink and/or downlink bandwidth information of the adjusted resources of the radio backhaul link, activation time information of adjustment of the resources of the radio backhaul link, and configuration information of the guard period between uplink and downlink.

In addition, the macro base station M1 may also send neighbor cell configuration update information to part of or all user terminals served by the macro base station M1 by using a system message or dedicated signaling, where the neighbor cell configuration update information includes one or more types of the following information: frequency information of the resources in the neighbor cell Cₘ₁, bandwidth information of the resources in the neighbor cell Cₘ₁, timeslot position information of the resources in the neighbor cell Cₘ₁, subframe offset information of the resources in the neighbor cell Cₘ₁ that are adjusted by the Pico base station P1; activation time information of adjustment of the resources in the neighbor cell Cₘ₁, and configuration information of the guard period between uplink and downlink.

511. The Pico base station P1, the macro base station M1, and the macro base station M2 interact with each other about usage status of UL/DL PRBs.

The Pico base station P1 may interact with the macro base station M1 and the macro base station M2 for the usage status of the UL/DL PRBs in the cell C_{P2} under triggering of a trigger event C1 and/or a trigger event C2.

512. The macro base station M1 prepares to adjust configuration of PRBs in the macro cell Cₘ₁.

In an application scenario, if the macro base station M1 determines, according to the monitored usage status of uplink PRBs in the cell Cₘ₁, that redundant uplink PRBs exist in the cell Cₘ₁, the number of configured uplink PRBs in the cell Cₘ₁ may be reduced; if the macro base station M1 determines, according to the monitored usage status of uplink PRBs in the cell Cₘ₁, that uplink physical resource blocks in the cell Cₘ₁ are insufficient, the number of configured uplink PRBs in the cell Cₘ₁ may be increased. In this case, the macro base station M1 may firstly instruct the Pico base station P1 to reduce the number of configured downlink PRBs in the Pico cell Cₚ₂, and increase the number of configured uplink PRBs in the cell Cₘ₁ after the Pico base station P1 correspondingly reduces the number of configured downlink PRBs in the Pico cell Cₚ₂.

513. The macro base station M1 sends a message ms53 (for example, an eNB configuration update message, or a cell activation message, or another message) to the Pico base station P1.

Correspondingly, the macro base station M1 may also notify information of resource adjustment in the macro cell Cₘ₁ to the Pico base station P1 by using the eNB configuration update message or the cell activation message (message ms53).

In practice, the eNB configuration update message or the cell activation message (message ms53) may carry indication information indicating an adjustment quantity of PRBs in the macro cell Cₘ₁ that are adjusted by the macro base station M1, where the indication information may include one or more types of the following information: frequency information of the resources in the macro cell Cₘ₁ that are adjusted by the macro base station M1, bandwidth information of the resources in the macro cell Cₘ₁ that are adjusted by the macro base station M1, the number of timeslots of the resources in the macro cell Cₘ₁ that are adjusted by the macro base station M1, timeslot position information of the resources in the macro cell Cₘ₁ that are adjusted by the macro base station M1, configuration information of the guard period between uplink and downlink, subframe offset information of the resources in the macro cell Cₘ₁ that are adjusted by the macro base station M1.

Further, the eNB configuration update message or the cell activation message (message ms53) may further carry: usage information (for example, indicating that the resources are used to configure an access link in a Pico cell, or a radio backhaul link, or energy saving configuration) of the resources in the macro cell Cₘ₁ that are adjusted by the macro base station M1, and/or activation time information of adjustment of the resources in the macro cell Cₘ₁.

514. The macro base station M1 sends a message ms54 (for example, an eNB configuration update message, or a cell activation message, or another message) to the macro base station M2.

Correspondingly, the macro base station M1 may also notify information of resource adjustment in the macro cell Cₘ₁ to the macro base station M2 by using the eNB configuration update message or the cell activation message (message ms54).

In practice, the eNB configuration update message or the cell activation message (message ms54) may carry indication information indicating an adjustment quantity of physical resource blocks PRBs in the macro cell Cₘ₁ that are adjusted by the macro base station M1, where the indication information may include one or more types of the following information: frequency information of the resources in the macro cell Cₘ₁ that are adjusted by the macro base station M1, bandwidth information of the resources in the macro cell Cₘ₁ that are adjusted by the macro base station M1, the number of timeslots of the resources in the macro cell Cₘ₁ that are adjusted by the macro base station M1, timeslot position information of the resources in the macro cell Cₘ₁ that are adjusted by the macro base station M1, configuration information of the guard period between uplink and downlink, subframe offset information of the resources in the macro cell Cₘ₁ that are adjusted by the macro base station M1.

Further, the eNB configuration update message or the cell activation message (message ms54) may further carry: usage information (for example, indicating that the resources are used to configure an access link in a Pico cell, or a radio backhaul link, or energy saving configuration) of the resources in the macro cell Cₘ₁ that are adjusted by the macro base station M1, and/or activation time information of adjustment of the resources in the macro cell Cₘ₁.

The macro base station M2 may changes configuration of uplink PRBs in the neighbor cell of the cell C_{P2} served by the macro base station M2 by using the eNB configuration update message or the cell activation message (message ms54), to prevent interference.

515. The Pico base station P1 adjusts resource configuration of the radio backhaul link and/or Pico cell C_{P2}.

The Pico base station P1 may determine, according to information of the adjusted resource configuration in the macro cell Cₘ₁ and interference caused by a neighbor cell to the macro cell Cₘ₁, how to adjust resource configuration of the radio backhaul link and/or Pico cell C_{P2}.

In an application scenario, if the macro base station M1 reduces the number of configured uplink/downlink PRBs in the cell Cₘ₁, the Pico base station P1 may correspondingly increase the number of configured PRBs of the radio backhaul link and/or Pico cell C_{P2}, or may not change the number of configured PRBs of the radio backhaul link and/or Pico cell C_{P2}; if the macro base station M1 increases the number of configured uplink/downlink PRBs in the cell Cₘ₁, the Pico base station P1 may correspondingly reduce the number of configured PRBs of the radio backhaul link and/or Pico cell C_{P2}.

516. The Pico base station P1 sends a message ms532 (for example, an eNB configuration update response message, or a cell activation response message, or an eNB configuration update message, or another message) to the macro base station M1, and notifies configuration changes of the cell and/or radio backhaul link configuration to the macro base station M1.

517. The macro base station M2 sends a message ms542 (for example, an eNB configuration update response message, or a cell activation response message, or an eNB configuration update message, or another message) to the macro base station M1, and notifies the configuration change in a neighbor cell to the macro base station M1.

518. The Pico base station P1 notifies the configuration change of the cell C_{P2} and/or radio backhaul link to the UE served by the Pico base station P1.

The macro base station M2 may also notify the configuration change of the cell and/or the radio backhaul link to the UE camping in a neighbor cell of the cell C_{P2}.

519. The macro base station M1 changes the configuration of the cell Cₘ₁.

In an application scenario, if the resources adjusted by the macro base station M1 are uplink resources in the cell Cₘ₁, and the adjusted uplink resources are used to configure a radio backhaul link between the macro base station M1 and the Pico base station P1, downlink timeslot positions of the radio backhaul link configured between the macro base station M1 and the Pico base station P1 satisfy positions of part of or all uplink timeslots in TDD configuration-compatible mode (or in non-TDD configuration-compatible mode) on the macro base station M1 and the Pico base station P1.

Uplink timeslot positions of the radio backhaul link configured between the macro base station M1 and the Pico base station P1 satisfy part of or all uplink timeslot positions in the TDD configuration-compatible mode (or in non-TDD configuration-compatible mode) on the macro base station M1 and the Pico base station P1.

In another application scenario, if the resources adjusted by the macro base station M1 are uplink resources and/or downlink frequency band resources in the cell Cₘ₁, and the adjusted uplink resources and/or downlink frequency band resources in the cell Cₘ₁ are used to configure a radio access link and a radio backhaul link between the macro base station M1 and the Pico base station P1, timeslot positions of a downlink backhaul link configured between the macro base station M1 and the Pico base station P1 are correspondingly part of or all uplink timeslot positions of a radio access link configured on the Pico base station P1, where the uplink timeslot positions of the radio access link satisfy uplink timeslot positions in TDD configuration-compatible mode or in non-TDD configuration-compatible mode.

Timeslot positions of an uplink backhaul link configured between the macro base station M1 and the Pico base station P1 are correspondingly part of or all downlink timeslot positions of the radio access link configured on the Pico base station P1, where the downlink timeslot positions of the radio access link satisfy downlink timeslot positions in TDD configuration-compatible mode or in non-TDD configuration-compatible mode. The uplink radio backhaul link configured between the macro base station M1 and the Pico base station P1 and part of downlink timeslots of the radio access link configured on the Pico base station P1 may be multiplexed in time-domain, frequency domain, or resource block mode.

520. The macro base station M1 notifies the configuration change in the cell Cₘ₁ to the UE served by the macro base station M1.

Further, the macro base station M1 may also send radio backhaul link configuration update information to part of or all user terminals served by the macro base station, where the radio backhaul link configuration update information includes one or more types of the following information: frequency information of the resources of the radio backhaul link, bandwidth information of the resources of the radio backhaul link, timeslot position information of the resources of the radio backhaul link, subframe offset information of the resources of the radio backhaul link that are adjusted by the Pico base station P1, activation time information of the adjusted resources of the radio backhaul link, and configuration information of the guard period between uplink and downlink.

As seen from the above, in the solution provided in this embodiment, the macro base station with redundant uplink and downlink resources adjusts resource configuration in the cell to provide part of or all the redundant resources in the cell for a Pico base station neighboring to the macro base station to configure a radio access link and/or a radio backhaul link for the cell. The Pico base station correspondingly adjusts, according to the adjustment of the resource configuration in the cell performed by the macro base station, resource configuration of the radio access link and/or the radio backhaul link of the cell. This mechanism helps improve usage efficiency of resources and enhance system performance and quality of service.

For a better understanding of the above method provided in the embodiments of the present invention, the following provides an access network device and a communication system for implementing the method.

Referring to FIG. 7, an embodiment of the present invention further provides an access network device 700, including:
an adjustment sending module 710, configured to send a first message to a second access network device, where the first message carries first indication information, the first indication information indicating an adjustment quantity of physical resource blocks PRBs in a first cell that are adjusted by the access network device 700; and
an adjustment receiving module 720, configured to receive a second message sent from the second access network device, where the second message carries second indication information, the second indication information indicating adjustment positions of PRBs of a radio link that are adjusted by the second access network device according to the first indication information.

In an application scenario, the access network device 700 further includes:
a second receiving module, configured to: before the adjustment sending module 710 sends the first message to the second access network device, receive usage status indication information of uplink and/or downlink resources of the second access network device, or receive usage status indication information of uplink and/or downlink resources of the second access network device and usage status indication information of uplink and/or downlink resources of an access network device neighboring to the second access network device.

In an application scenario, the access network device 700 further includes:
a third receiving module, configured to: before the adjustment sending module 710 sends the first message to the second access network device, receive cell configuration capability information of the second access network device, where the cell configuration capability information includes transmitter configuration information and/or receiver configuration information; and/or receive cell configuration information of an inactivated cell sent from the second access network device, where the cell configuration information includes one or more types of the following information: physical layer cell identifier, upper-layer cell identifier, tracing area code and public land mobile network PLMN identifier, cell mode information, and cell state information.

In an application scenario, the access network device 700 further includes:
a second sending module, configured to: after sending the first message to the second access network device or after receiving the second message sent from the second access network device, send serving cell configuration update information to part of or all user terminals served by the access network device 700 by using a system message or dedicated signaling, where the serving cell configuration update information includes one or more types of the following information: uplink and/downlink frequency information of the adjusted resources in the first cell, uplink and/or downlink bandwidth information of the adjusted resources in the first cell, uplink and/or downlink position information of the mute timeslots after the resources in the first cell are adjusted, activation time information of adjustment of the resources in the first cell, and configuration information of the guard period between uplink and downlink.

In an application scenario, the access network device 700 further includes:
a third sending module, configured to: after receiving the second message sent from the second access network device, send neighbor cell configuration update information to part of or all user terminals served by the access network device 700 by using a system message or dedicated signaling, where the neighbor cell configuration update information includes one or more types of the following information:
frequency information of resources in a neighbor cell, bandwidth information of the resources in the neighbor cell, uplink and/or downlink timeslot position information of the resources in the neighbor cell, and timeslots offset information of the resources in the neighbor cell that are adjusted by the second access network device; activation time information of adjustment of the resources in the neighbor cell; and configuration information of the guard period between uplink and downlink.

In an application scenario, the access network device 700 further includes:
a fourth sending module, configured to: after receiving the second message sent from the second access network device, send the radio backhaul link configuration update information to part of or all user terminals served by the access network device 700 by using a system message or dedicated signaling, where the radio backhaul link configuration update information includes one or more types of the following information:
frequency information of adjusted resources of a radio backhaul link, bandwidth information of the adjusted resources of the radio backhaul link, uplink and/or downlink timeslot position information of the adjusted resources of the radio backhaul link, timeslots offset information of the adjusted resources of the radio backhaul link, activation time information of the adjusted resources of the radio backhaul link and configuration information of the guard period between uplink and downlink.

In an application scenario, if the PRBs in the first cell that are adjusted by the access network device 700 are used for the second access network device to configure a radio access link of a cell, a position relationship of uplink and downlink resources in the first cell that are adjusted by the access network device 700 satisfies the radio access link of the cell configured by the second access network device as compatible with time division duplex (TDD, Time Division Duplexing) configuration; or a position relationship of uplink and downlink resources in the first cell that are adjusted by the access network device 700 satisfies a radio access link of a cell configured by the second access network device as compatible with non-TDD configuration. Correspondingly, the second access network device may correspondingly configure a radio access link for a cell compatible with TDD configuration or correspondingly configure a radio access link for a cell compatible with non-TDD configuration at the positions of the uplink and/or downlink resources in the first cell that are adjusted by the access network device 700.

In an application scenario, the access network device 700 may also carry a guard period configuration indication in the first message for instructing the second access network device to configure a guard period for a downlink radio access link and an uplink radio access link in a cell, where the guard period configuration indication is used to indicate that data is not transmitted on one or more neighbor downlink transmission symbols and/or uplink transmission symbols so that the one or more neighbor downlink transmission symbols and/or uplink transmission symbols are used as the guard period, or one or more neighbor downlink transmission symbols and/and uplink transmission symbols are shifted forward or backward by one or more symbols so that muted transmission symbols caused by shifting are used as the guard period. Correspondingly, the second access network device may set the guard period accordingly. Assuredly, the second access network device may also self-define how to set a guard period.

In an application scenario, if the resources adjusted by the access network device 700 are uplink resources in the first cell, and the adjusted uplink resources are used to configure a radio backhaul link between the access network device 700 and the second access network device, downlink timeslot positions of the radio backhaul link configured between the access network device 700 and the second access network device satisfy part of or all downlink timeslot positions in TDD configuration-compatible mode on the access network device 700 and the second access network device, and uplink timeslot positions of the radio backhaul link configured between the access network device 700 and the second access network device satisfy part of or all uplink timeslot positions in TDD configuration-compatible mode on the access network device 700 and the second access network device.

The second access network device may configure positions of the remaining uplink timeslots after the radio backhaul link is configured as uplink timeslots of the radio access link.

In an application scenario, if the resources adjusted by the access network device 700 are uplink resources and/or downlink frequency band resources in the first cell, and the adjusted uplink resources and/or downlink frequency band resources in the first cell are used to configure a radio access link and a radio backhaul link between the access network device 700 and the second access network device, timeslot positions of a downlink backhaul link configured between the access network device 700 and the second access network device are correspondingly part of or all uplink timeslot positions of a radio access link configured on the second access network device, where the uplink timeslot positions satisfy uplink timeslot positions in TDD configuration-compatible mode or in non-TDD configuration-compatible mode; timeslot positions of an uplink backhaul link configured between the access network device 700 and the second access network device are correspondingly part of or all downlink timeslot positions of the radio access link configured on the second access network device, where the downlink timeslot positions of the radio access link satisfy downlink timeslot positions in TDD configuration-compatible mode or in non-TDD configuration-compatible mode; and part of downlink timeslots of an uplink radio backhaul link configured between the access network device 700 and the second access network device, and of the radio access link configured on the second access network device are multiplexed in time-domain, frequency domain, or resource block mode.

It should be noted that the access network device 700 (for example, the macro base station M1) according to this embodiment may be used to implement all technical solutions in the above methods, and functions of the function modules thereof may be implemented by using the method in the above methods embodiments. Therefore, details are not described here again.

As seen from the above, in the solution provided in this embodiment, the access network device 700 with redundant uplink and/or downlink resources in a cell adjusts resource configuration in the cell and provides part of or all of the redundant resources in the cell for the second access network device neighboring to the access network device to configure a radio access link and/or a radio backhaul link for the cell. The second access network device correspondingly adjusts, according to the adjustment of the resource configuration in the cell performed by the access network device 700, resource configuration of the radio access link and/or the radio backhaul link of the cell. This mechanism helps improve usage efficiency of resources and enhance system performance and quality of service.

Referring to FIG. 8, an embodiment of the present invention further provides an access network device 800, including:
a fourth receiving module 810, configured to receive a first message sent from a first access network device, where the first message carries first indication information, the first indication information indicating an adjustment quantity of physical resource blocks PRBs in a first cell that are adjusted by the first access network device;a resource adjusting module 820, configured to adjust positions of PRBs of a radio link according to the adjustment quantity of physical resource blocks PRBs in the first cell that are adjusted by the first access network device that is indicated in the first indication information; and
a fifth sending module 830, configured to send a second message to the first access network device, where the second message carries second indication information, the second indication information indicating adjustment positions of the PRBs of the radio link that are adjusted by the resource adjusting module according to the first indication information.

In an application scenario, if the radio link adjusted by the resource adjusting module includes a cell radio access link, the access network device 800 may further include:
a sixth sending module, configured to send, after positions of the PRBs of the radio link are adjusted, serving cell configuration update information to part of or all user terminals served by the access network device by using a system message or dedicated signaling, where the serving cell configuration update information includes one or more types of the following information:
uplink and/or downlink frequency information of adjusted resources of a cell radio access link, uplink and/or downlink bandwidth information of the adjusted resources of the cell radio access link, activation time information of adjustment of the resources of the cell radio access link, and configuration information of the guard period between uplink and downlink.

In an application scenario, the access network device 800 may further include:
a seventh sending module, configured to: after the fourth receiving module receives the first message sent from the first access network device, or after the fifth sending module sends the second message to the first access network device, send neighbor cell configuration update information to part of or all user terminals served by the access network device by using a system message or dedicated signaling, where the neighbor cell configuration update information includes one or more types of the following information: frequency information of the resources in the first cell, bandwidth information of the resources in the first cell, uplink and/or downlink timeslot position information of the resources in the first cell, and timeslots offset information of the resources in the first cell that are adjusted by the first access network device; activation time information of adjustment of the resources in the first cell; and configuration information of the guard period between uplink and downlink.

In an application scenario, if the radio link adjusted by the resource adjusting module includes a radio backhaul link, the access network device 800 may further include:
an eighth sending module, configured to send radio backhaul link configuration update information to part or all user terminals served by the access network device by using a system message or dedicated signaling, where the radio backhaul link configuration update information includes one or more types of the following information:
frequency information of resources of a radio backhaul link, bandwidth information of the resources of the radio backhaul link, uplink and/or downlink timeslot position information of the resources of the radio backhaul link, and timeslots offset information of the resources of the radio backhaul link that are adjusted by the resource adjusting module; activation time information of the adjusted resources of the radio backhaul link; and configuration information of the guard period between uplink and downlink.

In an application scenario, if the resources adjusted by the first access network device are uplink resources in the first cell, and the adjusted uplink resources are used to configure a radio backhaul link between the first access network device and the access network device 800, downlink timeslot positions of the radio backhaul link configured between the first access network device and the access network device 800 satisfy part of or all downlink timeslot positions in TDD configuration-compatible mode on the first access network device and the access network device 800, and uplink timeslot positions of the radio backhaul link configured between the first access network device and the access network device 800 satisfy part of or all uplink timeslot positions in TDD configuration-compatible mode on the first access network device and the access network device 800.

The access network device 800 may configure positions of the remaining uplink timeslots after the radio backhaul link is configured as uplink timeslots of the radio access link.

In an application scenario, if the resources adjusted by the first access network device are uplink resources and/or downlink frequency band resources of the first cell, and the adjusted uplink resources and/or downlink frequency band resources in the cell are used to configure a radio access link and a radio backhaul link between the first access network device and the access network device 800, timeslot positions of a downlink backhaul link configured between the first access network device and the access network device 800 are correspondingly part of or all uplink timeslot positions of a radio access link configured on the access network device 800, where the uplink timeslot positions of the radio access link satisfy uplink timeslot positions in TDD configuration-compatible mode or in non-TDD configuration-compatible mode; timeslot positions of an uplink backhaul link configured between the first access network device and the access network device 800 are correspondingly part of or all downlink timeslot positions of the radio access link configured on the access network device 800, where the downlink timeslot positions of the radio access link satisfy downlink timeslot positions in TDD configuration-compatible mode or in non-TDD configuration-compatible mode; and an uplink radio backhaul link configured between the first access network device and the access network device 800, and part of downlink timeslots of the radio access link configured on the access network device 800 are multiplexed in time-domain, frequency domain, or resource block mode.

It should be noted that the access network device 800 (for example, a Pico base station P1) according to this embodiment may be used to implement all technical solutions in the above methods, and functions of the function modules may be implemented by using the method in the above methods embodiments. Therefore, details are not described here again.

As seen from the above, in the solution provided in this embodiment, the first access network device with redundant uplink and/or downlink resources in a cell adjusts resource configuration in the cell and provides part of or all the redundant resources in the cell for the access network device 800 to configure a radio access link and/or a radio backhaul link for the cell. The access network device 800 correspondingly adjusts, according to the adjustment of the resource configuration in the cell performed by the first access network device, resource configuration of the radio access link and/or the radio backhaul link of the cell. This mechanism helps improve usage efficiency of resources and enhance system performance and quality of service.

Referring to FIG. 9, an embodiment of the present invention further provides a communication system, including:
a first access network device 910, configured to: send a first message to a second access network device 920, where the first message carries first indication information, the first indication information indicating an adjustment quantity of physical resource blocks PRBs in a first cell that are adjusted by the first access network device 910; and receive a second message sent from the second access network device 920, where the second message carries second indication information, the second indication information indicating adjustment positions of PRBs of a radio link that are adjusted by the second access network device 920 according to the first indication information; and
the second network access device 920, configured to: receive the first message sent from the first access network device 910, adjust the positions of the PRBs of the radio link according to the adjustment quantity of physical resource blocks PRBs in the first cell that are adjusted by the first access network 910 device that is indicated in the first indication information, and sends the second message to the first access network device 910.

It should be noted that the preceding method embodiments are described with reference to a series of action combinations for ease of illustration. However, those skilled in the art should know that the present invention is not limited to the description of the action sequence for a reason that some steps can take other sequences or be performed at the same time according to the present invention. It should be further understood by persons skilled in the art that the described embodiments all belong to exemplary embodiments, and the involved actions and modules are not necessarily required by the present invention.

In the foregoing embodiments, the description of each of the embodiments has respective focuses. For a part that is not described in detail in a certain embodiment, reference may be made to related descriptions in other embodiments.

In conclusion, in the solutions provided in embodiments of the present invention, the first access network device with redundant uplink and/or downlink resources in a cell adjusts resource configuration in the cell and provides part of or all the redundant resources in the cell for the second access network device neighboring to the first access network device to configure a radio access link and/or a radio backhaul link for the cell. The second access network device correspondingly adjusts, according to the adjustment of the resource configuration in the cell performed by the first access network device, resource configuration of the radio access link and/or the radio backhaul link of the cell. This mechanism helps improve usage efficiency of resources and enhance system performance and quality of service.

Persons of ordinary skill in the art understand that all or part of the steps of the preceding methods can be implemented by hardware following instructions of programs. The programs may be stored in a computer readable storage medium. The storage medium may be a read only memory, a random access memory, a magnetic disk, or an optical disk.

The method, apparatus and system for adjusting configuration of a spectrum resource provided by embodiments of the present invention have been described in detail, and the principle and implementing modes of the present invention are also set forth with some particular instances. However, the above embodiments are merely used to help understanding of the method and core idea of the present invention. Meanwhile, for the person ordinary skilled in the art, the embodiments and the application scope thereof can be changed according to the idea of the present invention. In conclusion, it should be understood that the contents of the description are not intended to limit the present invention.

## Claims

1. A method for adjusting configuration of a spectrum resource, comprising:
sending, by a first access network device, a first message to a second access network device, wherein the first message carries first indication information, the first indication information indicating an adjustment quantity of physical resource blocks PRBs in a first cell that are adjusted by the first access network device; and
receiving, by the first access network device, a second message sent from the second access network device, wherein the second message carries second indication information, the second indication information indicating adjustment positions of PRBs of a radio link that are adjusted by the second access network device according to the first indication information.

2. The method according to claim 1, wherein
the first indication information comprises one or more types of the following information:
frequency information of the adjusted resources in the first cell, bandwidth information of the adjusted resources in the first cell, the number of uplink and/or downlink timeslots of the adjusted resources in the first cell, uplink and/or downlink timeslot position information of the adjusted resources in the first cell, and timeslots offset information of the adjusted resources in the first cell; and
the first message further carries one or more of types of the following information: usage information of the adjusted resources in the first cell, activation time information of adjustment of the resources in the first cell, and configuration information of the guard period between uplink and downlink.

3. The method according to claim 1, wherein
the second indication information comprises one or more types of the following information:
frequency information of the adjusted resources of the radio link, bandwidth information of the adjusted resources of the radio link, uplink and/or downlink timeslot position information of the adjusted resources of the radio link, and timeslots offset information of the adjusted resources of the radio link; and
the first message further carries usage information of the adjusted resources of the radio link, and/or activation time information of adjustment of the resources of the radio link.

4. The method according to any one of claims 1 to 3, wherein before sending the first message to the second access network device, the method further comprises:
receiving usage status indication information of uplink and/or downlink resources of the second access network device;
or,
receiving usage status indication information of uplink and/or downlink resources of the second access network device and usage status indication information of uplink and/or downlink resources of an access network device neighboring to the second access network device.

5. The method according to any one of claims 1 to 3, wherein before sending the first message to the second access network device, the method further comprises:
receiving cell configuration capability information of the second access network device, wherein the cell configuration capability information comprises transmitter configuration information and/or receiver configuration information;
and/or,
receiving cell configuration information of an inactivated cell sent from the second access network device, wherein the cell configuration information comprises one or more types of the following information: physical layer cell identifier, upper-layer cell identifier, tracing area code and public land mobile network PLMN identifier, cell mode information, and cell state information.

6. The method according to claim 1, further comprising:
after the first access network device sends the first message to the second access network device or after the first access network device receives the second message sent from the second access network device, sending, by the first access network device, serving cell configuration update information to part of or all user terminals served by the first access network device by using a system message or dedicated signaling, wherein the serving cell configuration update information comprises one or more types of the following information:
uplink and/downlink frequency information of the adjusted resources in the first cell, uplink and/or downlink bandwidth information of the adjusted resources in the first cell, uplink and/or downlink position information of mute timeslots after the resources in the first cell are adjusted, activation time information of adjustment of the resources in the first cell, and configuration information of the guard period between uplink and downlink.

7. The method according to claim 1, further comprising:
after the first access network device receives the second message sent from the second access network device, sending, by the first access network device, neighbor cell configuration update information to part of or all user terminals served by the first access network device by using a system message or dedicated signaling, wherein the neighbor cell configuration update information comprises one or more types of the following information:
frequency information of resources in a neighbor cell, bandwidth information of the resources in the neighbor cell, uplink and/or downlink timeslot position information of the resources in the neighbor cell, and timeslots offset information of the resources in the neighbor cell that are adjusted by the second access network device; and activation time information of adjustment of the resources in the neighbor cell.

8. The method according to claim 1, further comprising:
after the first access network device receives the second message sent from the second access network device, sending, by the first access network device, radio backhaul link configuration information to part of or all user terminals served by the first access network device by using a system message or dedicated signaling, wherein the radio backhaul link configuration information comprises one or more types of the following information:
frequency information of adjusted resources of a radio backhaul link, bandwidth information of the adjusted resources of the radio backhaul link, uplink and/or downlink timeslot position information of the adjusted resources of the radio backhaul link, timeslots offset information of the adjusted resources of the radio backhaul link, and activation time information of adjustment of the resources of the radio backhaul link.

9. The method according to claim 1, wherein if the PRBs in the first cell that are adjusted by the first access network device are used for the second access network device to configure a radio access link of a cell,
a position relationship of uplink and downlink resources in the first cell that are adjusted by the first access network device satisfies the radio access link of the cell configured by the second access network device as compatible with time division duplex TDD configuration;
or,
a position relationship uplink and downlink resources in the first cell that are adjusted by the first access network device satisfies the radio access link of the cell configured by the second access network device as incompatible with TDD configuration.

10. The method according to claim 9, further comprising:
transmitting, by the first access network device, only uplink control information at uplink PRB positions corresponding to downlink PRB positions of a radio access link configured by the second access network device.

11. The method according to claim 1, wherein
the first message further carries a guard period configuration indication for instructing the second access network device to configure a guard period for a downlink radio access link and an uplink radio access link in a cell, wherein
the guard period configuration indication is used to indicate that:
data is not transmitted on one or more neighbor downlink transmission symbols and/or uplink transmission symbols so that the one or more neighbor downlink transmission symbols and/or uplink transmission symbols are used as the guard period;
or,
one or more neighbor downlink transmission symbols and/and uplink transmission symbols are shifted forward or backward by one or more symbols so that muted transmission symbols caused by shifting are used as the guard period.

12. The method according to claim 1, 2, 3, 6, 7 or 8, wherein if the resources adjusted by the first access network device are uplink resources in the first cell, and the adjusted uplink resources are used to configure a radio backhaul link between the first access network device and the second access network device,
downlink timeslot positions of the radio backhaul link configured between the first access network device and the second access network device satisfy part of or all downlink timeslot positions in TDD configuration-compatible mode on the first access network device and the second access network device; and
uplink timeslot positions of the radio backhaul link configured between the first access network device and the second access network device satisfy part of or all uplink timeslot positions in TDD configuration-compatible mode on the first access network device and the second access network device.

13. The method according to claim 1, 2, 3, 6, 7 or 8, wherein if the resources adjusted by the first access network device are uplink resources and/or downlink frequency band resources in the first cell, and the adjusted uplink resources and/or downlink frequency band resources in the first cell are used to configure a radio access link and a radio backhaul link between the first access network device and the second access network device,
timeslot positions of a downlink backhaul link configured between the first access network device and the second access network device are correspondingly part of or all uplink timeslot positions of a radio access link configured on the second access network device, wherein the uplink timeslot positions of the radio access link satisfy uplink timeslot positions in TDD configuration-compatible mode or in non-TDD configuration-compatible mode;
timeslot positions of an uplink backhaul link configured between the first access network device and the second access network device are correspondingly part of or all downlink timeslot positions of the radio access link configured on the second access network device, wherein the downlink timeslot positions of the radio access link satisfy downlink timeslot positions in TDD configuration-compatible mode or in non-TDD configuration-compatible mode; and
an uplink radio backhaul link configured between the first access network device and the second access network device, and part of downlink timeslots of the radio access link configured on the second access network device are multiplexed in time-domain, frequency domain, or resource block mode.

14. A method for adjusting configuration of a spectrum resource, comprising:
receiving, by a second access network device, a first message sent from a first access network device, wherein the first message carries first indication information, the first indication information indicating an adjustment quantity of physical resource blocks PRBs in a first cell that are adjusted by the first access network device;
adjusting positions of PRBs of a radio link according to the adjustment quantity of physical resource blocks PRBs in the first cell that are adjusted by the first access network device that is indicated in the first indication information; and
sending a second message to the first access network device, wherein the second message carries second indication information, the second indication information indicating adjustment positions of the PRBs of the radio link that are adjusted by the second access network device according to the first indication information.

15. The method according to claim 14, wherein if the adjusted radio link comprises a cell radio access link, after adjusting the positions of the PRBs of the radio link, the method further comprises:
sending, by the second access network device, serving cell configuration update information to part of or all user terminals served by the second access network device by using a system message or dedicated signaling, wherein the serving cell configuration update information comprises one or more types of the following information:
uplink and/or downlink frequency information of the adjusted resources of the cell radio access link, uplink and/or downlink bandwidth information of the adjusted resources of the cell radio access link, and activation time information of adjustment of the resources of the cell radio access link.

16. The method according to claim 14, wherein
after receiving the first message sent from the first access network device, or after sending the second message to the first access network device, the method further comprises:
sending, by the second access network device, neighbor cell configuration update information to part of or all user terminals served by the second access network device by using a system message or dedicated signaling, wherein the neighbor cell configuration update information comprises one or more types of the following information: frequency information of the resources in the first cell, bandwidth information of the resources in the first cell, uplink and/or downlink timeslot position information of the resources in the first cell, timeslots offset information of the resources in the first cell that are adjusted by the first access network device, activation time information of adjustment of the resources in the first cell, and configuration information of the guard period between uplink and downlink.

17. The method according to claim 14, wherein if the adjusted radio link comprises a radio backhaul link, after adjusting the positions of the PRBs of the radio link, the method further comprises:
sending, by the second access network device, radio backhaul link configuration update information to part or all user terminals served by the second access network device by using a system message or dedicated signaling, wherein the radio backhaul link configuration update information comprises one or more types of the following information:
frequency information of the resources of the radio backhaul link, bandwidth information of the resources of the radio backhaul link, uplink and/or downlink timeslot position information of the resources of the radio backhaul link, and timeslots offset information of the resources of the radio backhaul link that are adjusted by the second access network device; and activation time information of adjustment of the resources of the radio backhaul link.

18. An access network device, comprising:
an adjustment sending module, configured to send a first message to a second access network device, wherein the first message carries first indication information, the first indication information indicating an adjustment quantity of physical resource blocks PRBs in a first cell that are adjusted by the first access network device; and
an adjustment receiving module, configured to receive a second message sent from the second access network device, wherein the second message carries second indication information, the second indication information indicating adjustment positions of PRBs of a radio link that are adjusted by the second access network device according to the first indication information.

19. The access network device according to claim 18, further comprising:
a second receiving module, configured to: before the adjustment sending module sends the first message to the second access network device, receive usage status indication information of uplink and/or downlink resources of the second access network device, or receive usage status indication information of uplink and/or downlink resources of the second access network device and usage status indication information of uplink and/or downlink resources of an access network device neighboring to the second access network device.

20. The access network device according to claim 18, further comprising:
a third receiving module, configured to: before the adjustment sending module sends the first message to the second access network device, receive cell configuration capability information of the second access network device, wherein the cell configuration capability information comprises transmitter configuration information and/or receiver configuration information; and/or receive cell configuration information of an inactivated cell sent from the second access network device, wherein the cell configuration information comprises one or more types of the following information: physical layer cell identifier, upper-layer cell identifier, tracing area code and public land mobile network PLMN identifier, cell mode information, and cell state information.

21. The access network device according to claim 18, further comprising:
a second sending module, configured to: after sending the first message to the second access network device or after receiving the second message sent from the second access network device, send serving cell configuration update information to part of or all user terminals served by the access network device by using a system message or dedicated signaling, wherein the serving cell configuration update information comprises one or more types of the following information:
uplink and/downlink frequency information of the adjusted resources in the first cell, uplink and/or downlink bandwidth information of the adjusted resources in the first cell, uplink and/or downlink position information of mute timeslots after the resources in the first cell are adjusted, activation time information of adjustment of the resources in the first cell, and configuration information of the guard period between uplink and downlink.

22. The access network device according to claim 18, further comprising:
a third sending module, configured to: after receiving the second message sent from the second access network device, send neighbor cell configuration update information to part of or all user terminals served by the access network device by using a system message or dedicated signaling, wherein the neighbor cell configuration update information comprises one or more types of the following information:
frequency information of resources in a neighbor cell, bandwidth information of the resources in the neighbor cell, uplink and/or downlink timeslot position information of the resources in the neighbor cell, and timeslots offset information of the resources in the neighbor cell that are adjusted by the second access network device; and activation time information of adjustment of the resources in the neighbor cell.

23. The access network device according to claim 18, further comprising:
a fourth sending module, configured to: after receiving the second message sent from the second access network device, send the radio backhaul link configuration update information to part of or all user terminals served by the access network device by using a system message or dedicated signaling, wherein the radio backhaul link configuration update information comprises one or more types of the following information:
frequency information of adjusted resources of a radio backhaul link, bandwidth information of the adjusted resources of the radio backhaul link, uplink and/or downlink timeslot position information of the adjusted resources of the radio backhaul link, timeslots offset information of the adjusted resources of the radio backhaul link, and activation time information of adjustment of the resources of the radio backhaul link.

24. An access network device, comprising:
a fourth receiving module, configured to receive a first message sent from a first access network device, wherein the first message carries first indication information, the first indication information indicating an adjustment quantity of physical resource blocks PRBs in a first cell that are adjusted by the first access network device; and
a resource adjusting module, configured to adjust positions of PRBs of a radio link according to the adjustment quantity of physical resource blocks PRBs in the first cell that are adjusted by the first access network device that is indicated in the first indication information;
and
a fifth sending module, configured to send a second message to the first access network device, wherein the second message carries second indication information, the second indication information indicating adjustment positions of the PRBs of the radio link that are adjusted by the resource adjusting module according to the first indication information.

25. The access network device according to claim 24, wherein if the radio link adjusted by the resource adjusting module comprises a cell radio access link, the access network device further comprises:
a sixth sending module, configured to send, after positions of the PRBs of the radio link are adjusted, serving cell configuration update information to part of or all user terminals served by the access network device by using a system message or dedicated signaling, wherein the serving cell configuration update information comprises one or more types of the following information:
uplink and/or downlink frequency information of adjusted resources of a cell radio access link, uplink and/or downlink bandwidth information of the adjusted resources of the cell radio access link, activation time information of adjustment of the resources of the cell radio access link, and configuration information of the guard period between uplink and downlink.

26. The access network device according to claim 24, further comprising:
a seventh sending module, configured to: after the fourth receiving module receives the first message sent from the first access network device, or after the fifth sending module sends the second message to the first access network device, send neighbor cell configuration update information to part of or all user terminals served by the access network device by using a system message or dedicated signaling, wherein the neighbor cell configuration update information comprises one or more types of the following information: frequency information of the resources in the first cell, bandwidth information of the resources in the first cell, uplink and/or downlink timeslot position information of the resources in the first cell, timeslots offset information of the resources in the first cell that are adjusted by the first access network device; activation time information of adjustment of the resources in the first cell; and configuration information of the guard period between uplink and downlink.

27. The access network device according to claim 24, wherein if the radio link adjusted by the resource adjusting module comprises a radio backhaul link, the access network device further comprises:
an eighth sending module, configured to send radio backhaul link configuration update information to part or all user terminals served by the access network device by using a system message or dedicated signaling, wherein the radio backhaul link configuration update information comprises one or more types of the following information:
frequency information of resources of a radio backhaul link, bandwidth information of the resources of the radio backhaul link, uplink and/or downlink timeslot position information of the resources of the radio backhaul link, and timeslots offset information of the resources of the radio backhaul link adjusted by the resource adjusting module; and activation time information of the adjusted resources of the radio backhaul link.

28. A communication system, comprising:
a first access network device, configured to: send a first message to a second access network device, wherein the first message carries first indication information, the first indication information indicating an adjustment quantity of physical resource blocks PRBs in a first cell that are adjusted by the first access network device; and receive a second message sent from the second access network device, wherein the second message carries second indication information, the second indication information indicating adjustment positions of PRBs of a radio link that are adjusted by the second access network device according to the first indication information; and
the second network access device, configured to: receive the first message sent from the first access network device, adjust the positions of the PRBs of the radio link according to the adjustment quantity of physical resource blocks PRBs in the first cell that are adjusted by the first access network device that is indicated in the first indication information, and sends the second message to the first access network device.
